# EUROPEAN PATENT APPLICATION

(11) **EP 4 603 872 A1**
(43) Date of publication of application: **20.08.2025**
(21) Application number: 23877206.5
(22) Date of filing: 04.10.2023
(51) Int. Cl.: G01S 13/84, E05B 49/00

(54) **DISTANCE MEASUREMENT SYSTEM, COMMUNICATION STATION, AND DISTANCE MEASUREMENT METHOD**

(30) Priority: 13.10.2022 JP 2022164644
(71) Applicant: Alps Alpine Co., Ltd., Tokyo 145-8501 (JP)
(72) Inventor: TERADO, Yusuke, Tokyo 145-8501 (JP); TAKAI, Daisuke, Tokyo 145-8501 (JP); SAITO, Toshihiko, Tokyo 145-8501 (JP); KAMATA, Koichi, Tokyo 145-8501 (JP)
(74) Representative: Maiwald GmbH
(86) International application number: PCT/JP2023/036197
(87) International publication number: WO 2024/080201

(57) **Abstract**

Provided are a distance measuring system, a communication station, and a distance measuring method, in which highly-accurate distance measurement can be performed by setting the measurement frequency according to a measured distance. The distance measuring system includes a first communication station; and a second communication station, wherein the second communication station includes a distance measuring part configured to perform a distance measuring process of measuring a distance between the first communication station and the second communication station based on a result obtained from a signal transmitted bidirectionally between the first communication station and the second communication station; and a frequency setting part configured to set a frequency at which the distance measuring process is performed by the distance measuring part according to the distance measured by the distance measuring part.

## Description

### TECHNICAL FIELD

The present disclosure relates to a distance measuring system, a communication station, and a distance measuring method.

### BACKGROUND ART

Conventionally, there is a positioning time interval control device for controlling a time interval for measuring a position. The positioning time interval control device includes an obtaining unit configured to obtain a movement state and a movement speed of a mobile terminal; and a positioning time interval setting unit configured to set the time interval for measuring the position of (distance to) the mobile terminal and a time interval for outputting position information derived from the measurement based on the movement state and the movement speed of the mobile terminal obtained by the obtaining unit. The positioning time interval setting unit changes the time intervals when the movement state and/or the movement speed of the mobile terminal is changed. At the time interval set by the positioning time interval setting unit, the mobile terminal obtains the position information of the mobile terminal and outputs the position information. The positioning time interval setting unit sets the time interval for measuring the position of the mobile terminal and the time interval for outputting position information derived from the measurement longer with an increase in the movement speed of the mobile terminal (see Patent Document 1, for example).

### RELATED-ART DOCUMENTS

### PATENT DOCUMENTS

Patent Document 1: International Publication Pamphlet No. WO2011/102151 .

### SUMMARY OF THE INVENTION

### PROBLEM TO BE SOLVED BY THE INVENTION

The conventional positioning time interval control device does not change the frequency at which the distance to the mobile terminal is measured according to the distance to the mobile terminal. Thus, the distance to the mobile terminal cannot be accurately measured.

In view of the above, an object is to provide a distance measuring system, a communication station, and a distance measuring method, in which highly-accurate distance measurement can be performed by setting the measurement frequency according to a measured distance.

### MEANS TO SOLVE THE PROBLEM

A distance measuring system according to an embodiment of the present disclosure includes a first communication station; and a second communication station, wherein the second communication station includes a distance measuring part configured to perform a distance measuring process of measuring a distance between the first communication station and the second communication station based on a result obtained from a signal transmitted bidirectionally between the first communication station and the second communication station; and a frequency setting part configured to set a frequency at which the distance measuring process is performed by the distance measuring part according to the distance measured by the distance measuring part.

### EFFECTS OF THE INVENTION

A distance measuring system, a communication station, and a distance measuring method, in which highly-accurate distance measurement can be performed by setting the measurement frequency according to a measured distance, can be provided.

### BRIEF DESCRIPTION OF THE DRAWINGS

[FIG. 1] FIG. 1 is a diagram illustrating a vehicle 10 and a smartphone 20 provided with a distance measuring device 100 and a distance measuring device 200 according to a first embodiment, respectively;
[FIG. 2] FIG. 2 is a diagram illustrating an example of configurations of the distance measuring devices 100 and 200 according to the first embodiment;
[FIG. 3A] FIG. 3A is a diagram illustrating an example of an overview of overall processing performed by the distance measuring devices 100 and 200;
[FIG. 3B] FIG. 3B is a diagram illustrating an example of the frequency of each distance measuring process;
[FIG. 4A] FIG. 4A is a diagram illustrating a flowchart of an example of processing performed by the distance measuring devices 100 and 200;
[FIG. 4B] FIG. 4B is diagram illustrating the flowchart of the example of the processing performed by the distance measuring devices 100 and 200;
[FIG. 5] FIG. 5 is a diagram illustrating an example of a configuration in which a distance measuring system 300M according to a modification of the first embodiment is applied to a speaker system;
[FIG. 6] FIG. 6 is a diagram illustrating an example of configurations of distance measuring devices 100 and 200 according to a second embodiment;
[FIG. 7] FIG. 7 is a diagram illustrating an example of a location where distance measurement information is stored in an advertising signal;
[FIG. 8] FIG. 8 is a diagram illustrating an example of reception information and distance measurement information received by the distance measuring device 10;
[FIG. 9] FIG. 9 is a diagram illustrating an example of calculation results of evaluation scores;
[FIG. 10] FIG. 10 is a sequence diagram illustrating an example of processing performed by distance measuring devices 100 and 200;
[FIG. 11] FIG. 11 is a flowchart illustrating a specific example of processing contents of process 1, which is performed by the distance measuring device 100;
[FIG. 12] FIG. 12 is a flowchart illustrating a specific example of processing contents of process 2; and
[FIG. 13] FIG. 13 is a diagram illustrating an example calculation of predicted positions.

### MODE FOR CARRYING OUT THE INVENTION

Embodiments to which distance measuring systems, communication stations, and distance measuring methods of the present disclosure are applied will be described below.

### <First Embodiment>

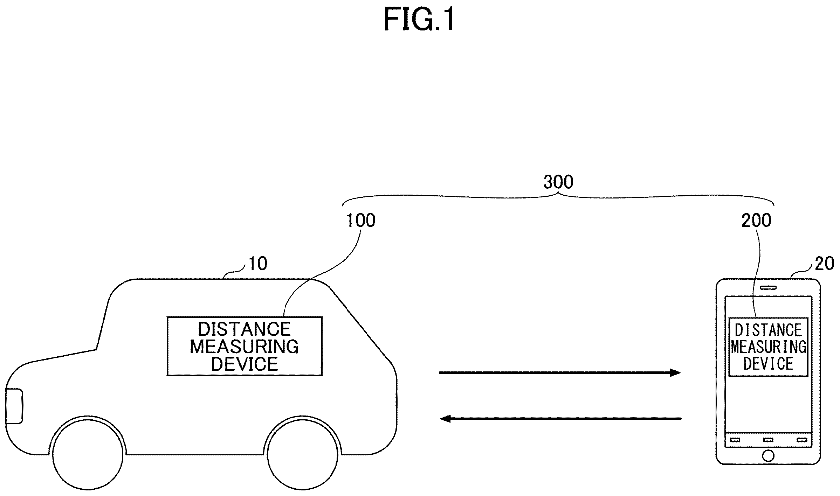

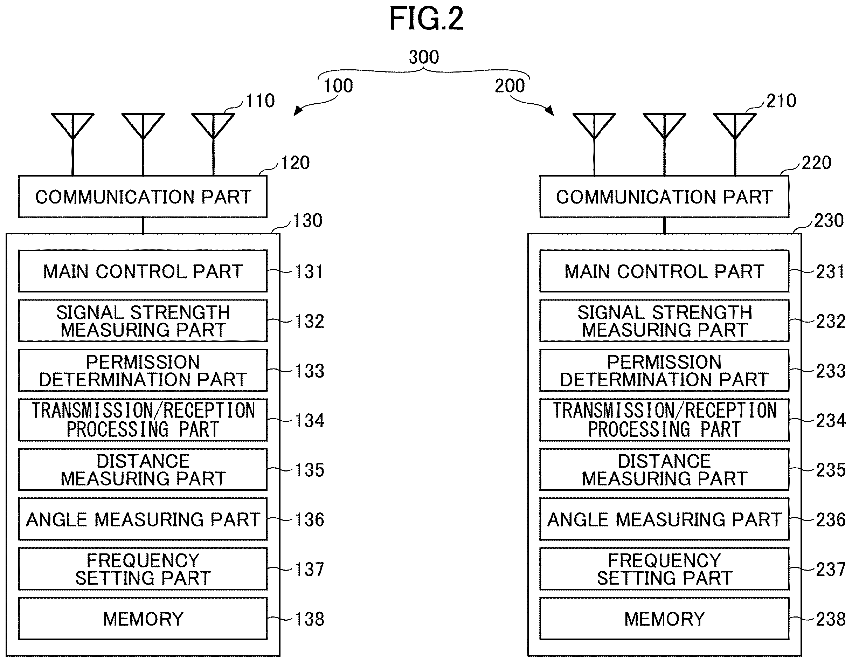

FIG. 1 is a diagram illustrating a vehicle 10 and a smartphone 20 provided with a distance measuring device 100 and a distance measuring device 200 according to a first embodiment, respectively. FIG. 2 is a diagram illustrating an example of configurations of the distance measuring devices 100 and 200 according to the first embodiment. A system including the distance measuring devices 100 and 200 is a distance measuring system 300.

As an example, a configuration in which the distance measuring device 100 is implemented in a smart entry system installed in the vehicle 10, and the distance measuring device 200 is implemented in the smartphone 20 will be described. The smartphone 20 functions as a smart key for the smart entry system of the vehicle 10. The distance measuring devices 100 and 200 perform packet communication by Bluetooth (registered trademark) Low Energy (BLE), for example.

The distance measuring device 100 is an example of a first communication station, and the distance measuring device 200 is an example of a second communication station. As an example, a configuration in which the vehicle 10 is parked and is not moved, and thus the distance measuring device 100 is a fixed station that does not move and the distance measuring device 200 is a mobile station that is movable according to the movement of an owner of the smartphone 20 will be described. The fixed station is not limited to the parked vehicle 10, and may be, for example, a building or the like. However, the distance measuring device 100 is not limited to a fixed station, and may be movable.

Further, as an example, an automatic parking assistance system is installed in the vehicle 10, and the distance measuring device 100 is included in the automatic parking assistance system. The automatic parking assistance system remotely transmits a command from the smartphone 20 to the vehicle 10 by a wireless communication so as to cause the vehicle 10 to be autonomously parked at a parking position or the vehicle 10 to autonomously exit from the parking position.

At least one of the distance measuring device 100 of the vehicle 10 or the distance measuring device 200 of the smartphone 20 measures the distance between the vehicle 10 and the smartphone 20, and doors, a trunk, or the like of the vehicle 10 are unlocked when the distance measured by the distance measuring device 100 or 200 is an appropriate distance.

Herein, as an example, it is assumed that the distance measuring device 200 of the smartphone 20 performs a distance measuring process of measuring a distance, and sends a notification indicating the measured result to the distance measuring device 100 of the vehicle 10. As an example, the distance measuring devices 100 and 200 have the same configuration.

### <Configuration of Distance Measuring Device 100>

The distance measuring device 100 includes three antennas 110, a communication part 120, and a micro controller unit (MCU) 130.

### <Antennas 110>

Each of the antennas 110 is connected to the communication part 120 and receives a signal transmitted from the distance measuring device 200 of the smartphone 20. Note that a configuration in which the distance measuring device 100 includes the three antennas 110 is illustrated in FIG. 1; however, the distance measuring device 100 may include four or more antennas 110. The three antennas 110 are configured such that two antennas are disposed on a first axis of two axes that are orthogonal to each other, two antennas are disposed on a second axis of the two axes that are orthogonal to each other, and one of the antennas is disposed on both the first axis and the second axis.

### <Communication Part 120>

The communication part 120 includes an analog front-end (AFE), an analog-to-digital (AD) converter, and the like, and performs signal processing such as AD conversion and the like of a signal received by the antennas 110 from the distance measuring device 200 and outputs the result to the MCU 130.

### <MCU 130>

The MCU 130 includes a main control part 131, a signal strength measuring part 132, a permission determination part 133, a transmission/reception processing part 134, a distance measuring part 135, an angle measuring part 136, a frequency setting part 137, and a memory 138. As an example, the MCU 130 is implemented by a microcomputer including a central processing unit (CPU), a random access memory (RAM), a read only memory (ROM), an internal bus, and the like. The main control part 131, the signal strength measuring part 132, the permission determination part 133, the transmission/reception processing part 134, the distance measuring part 135, the angle measuring part 136, and the frequency setting part 137 represent functions of a program executed by the MCU 130 as functional blocks. Further, the memory 138 functionally represents a memory of the MCU 130.

### <Main Control Part 131>

The main control part 131 is a processing part that controls the entire MCU 130, and performs processes other than processes performed by the signal strength measuring part 132, the permission determination part 133, the transmission/reception processing part 134, the distance measuring part 135, the angle measuring part 136, and the frequency setting part 137.

### <Signal Strength Measuring Part 132>

The signal strength measuring part 132 measures a received signal strength indicator (RSSI) indicating the signal strength of an advertising signal received from the distance measuring device 200 via the communication part 120, and outputs the measured RSSI to the permission determination part 133. The RSSI of the advertising signal output from the distance measuring device 200 is proportional to the distance between the distance measuring devices 100 and 200. Therefore, if the RSSIs of advertising signals output from the distance measuring device 200 are measured at a plurality of distances in advance, the distance between the distance measuring devices 100 and 200 can be estimated based on the RSSI measured by the signal strength measuring part 132, by using interpolation processing or the like.

### <Permission Determination Part 133>

The permission determination part 133 determines whether to permit the distance measuring device 200 to establish a communication connection via BLE of the distance measuring device 200 with respect to the distance measuring device 100, based on the RSSI of the advertising signal measured by the signal strength measuring part 132. If the determination is yes, the permission determination part 133 performs a permission determination process of generating a permission signal. More specifically, the permission determination part 133 permits a distance measuring part 235 of the distance measuring device 200 to perform a distance measuring process if the signal strength measured by the signal strength measuring part 132 is greater than or equal to a predetermined strength. The permission signal is transmitted to the distance measuring device 200 by the main control part 131.

### <Transmission/Reception Processing Part 134>

The transmission/reception processing part 134 transmits and receives signals to and from a transmission/reception processing part 234 of the distance measuring device 200 in order to acquire data, such as a round-trip time, phase differences, and frequency components of signals, necessary for the distance measuring part 135 of the distance measuring device 100 or the distance measuring part 235 of the distance measuring device 200 to perform distance measurement. According to the first embodiment, for example, a distance measuring process of calculating the distance between the distance measuring devices 100 and 200 is performed by the distance measuring part 235 of the distance measuring device 200, and is not performed by the distance measuring part 135 of the distance measuring device 100. Therefore, when the distance measuring part 235 of the distance measuring device 200 performs distance measurement, the transmission/reception processing part 134 performs the following auxiliary processes in accordance with processes performed by the transmission/reception processing part 234.

When the distance measuring part 235 of the distance measuring device 200 performs round-trip time (RTT)-based distance measurement, the transmission/reception processing part 134 receives an RTT signal from the transmission/reception processing part 234 of the distance measuring device 200 via any of the antennas 110, and then transmits the RTT signal back to the transmission/reception processing part 234 of the distance measuring device 200 from any of the antennas 110. In this case, the transmission/reception processing part 134 can use one of the three antennas 110 to receive and transmit the RTT signal.

When the distance measuring part 235 of the distance measuring device 200 performs time of arrival (TOA)-based distance measurement, the transmission/reception processing part 134 receives and transmits signals from and to the transmission/reception processing part 234. In this case, the transmission/reception processing part 134 can use one of the three antennas 110 to transmit and receive the signals. The transmission/reception processing part 134 measures the phases of signals received from the distance measuring device 200, and transmits data indicating the measured phases to the distance measuring device 200.

When an angle measuring part 236 of the distance measuring device 200 performs angle of arrival (AOA)-based angle measurement, the transmission/reception processing part 134 receives signals from the distance measuring device 200 via the three antennas 110, measures phase differences obtained when the signals are received by the three antennas 110, and transmits data representing the measured phase differences to the distance measuring device 200.

### <Distance Measuring Part 135>

The distance measuring part 135 can perform an RTT-based distance measuring process and a TOA-based distance measuring process. In the first embodiment, because such a distance measuring process (a process of calculating a distance) is performed by the distance measuring part 235 of the distance measuring device 200, the distance measuring part 135 does not perform a distance measuring process. The RTT-based distance measuring process and the TOA-based distance measuring process will be described later with respect to the distance measuring part 235 of the distance measuring device 200. In the present embodiment, an example in which the distance measuring devices 100 and 200 have the same configuration will be described. Thus, the MCU 130 of the distance measuring device 100 includes the distance measuring part 135, but the MCU 130 of the distance measuring device 100 does not necessarily include the distance measuring part 135.

### <Angle Measuring Part 136>

The angle measuring part 136 can perform an AOA -based angle measuring process of measuring, by using the three antennas 110, an elevation angle and an azimuth angle in a polar coordinate system of the position of the distance measuring device 200 with respect to the distance measuring device 100. However, in the first embodiment, the angle measuring part 136 of the distance measuring device 100 does not perform the angle measuring process, and the angle measuring part 236 of the distance measuring device 200 performs the angle measuring process. The angle measuring part 136 does not perform the angle measuring process. Thus, the MCU 130 of the distance measuring device 100 does not necessarily include the angle measuring part 136.

### <Frequency Setting Part 137>

The frequency setting part 137 sets the frequency at which the distance measuring part 135 performs a distance measuring process according to a distance measured by a distance measuring process performed by the distance measuring part 135. However, in the first embodiment, a distance measuring process is not performed by the distance measuring part 135 of the distance measuring device 100 and is performed by the distance measuring part 235 of the distance measuring device 200. Therefore, the frequency setting part 137 does not perform a process of setting the frequency. The MCU 130 of the distance measuring device 100 does not necessarily include the frequency setting part 137.

### <Memory 138>

The memory 138 stores programs, data, and the like that are necessary when the main control part 131, the signal strength measuring part 132, the permission determination part 133, the transmission/reception processing part 134, the distance measuring part 135, the angle measuring part 136, and the frequency setting part 137 perform processes.

### <Configuration of Distance Measuring Device 200>

The distance measuring device 200 includes three antennas 210, a communication part 220, and an MCU 230. Each of the antennas 210 is connected to the communication part 220 and receives a signal transmitted from the distance measuring device 100. Note that a configuration in which the distance measuring device 200 includes the three antennas 210 is illustrated in FIG. 1; however, the distance measuring device 200 may include four or more antennas 210. The three antennas 210 are configured such that two antennas are disposed on a first axis of two axes that are orthogonal to each other, two antennas are disposed on a second axis of the two axes that are orthogonal to each other, and one of the antennas is disposed on both the first axis and the second axis.

The distance measuring device 200 has the same configuration as the distance measuring device 100 as an example. That is, the antennas 210, the communication part 220, and the MCU 230 are similar to the antennas 110, the communication part 120, and the MCU 130 of the distance measuring device 100, respectively. However, in the first embodiment, the distance measuring devices 100 and 200 are configured to have different roles. Specifically, the distance measuring device 200 does not measure RSSIs and does not determine connection permission, and the distance measuring device 200 performs a distance measuring process, an angle measuring process, and a frequency setting process. Therefore, in the first embodiment, the operation of the distance measuring device 100 and the operation of the distance measuring device 200 are different. The MCU 230 will be described below.

### <MCU 230>

The MCU 130 includes a main control part 231, a signal strength measuring part 232, a permission determination part 233, the transmission/reception processing part 234, the distance measuring part 235, the angle measuring part 236, a frequency setting part 237, and a memory 238. The main control part 231, the signal strength measuring part 232, the permission determination part 233, the transmission/reception processing part 234, the distance measuring part 235, the angle measuring part 236, the frequency setting part 237, and the memory 238 are the same as the main control part 131, the signal strength measuring part 132, the permission determination part 133, the transmission/reception processing part 134, the distance measuring part 135, the angle measuring part 136, the frequency setting part 137, and the memory 138 of the MCU 130 of the distance measuring device 100, respectively.

The main control part 231, the signal strength measuring part 232, the permission determination part 233, the transmission/reception processing part 234, the distance measuring part 235, the angle measuring part 236, and the frequency setting part 237 represent functions of a program executed by the MCU 230 as functional blocks. Further, the memory 238 functionally represents a memory of the MCU 230.

### <Main Control Part 231>

The main control part 231 is a processing part that controls the entire MCU 230, and performs processes other than processes performed by the signal strength measuring part 232, the permission determination part 233, the transmission/reception processing part 234, the distance measuring part 235, the angle measuring part 236, and the frequency setting part 237.

### <Signal Strength Measuring Part 232>

Similar to the signal strength measuring part 132 of the distance measuring device 100, the signal strength measuring part 232 can measure a received signal strength indicator (RSSI) of an advertising signal received from the distance measuring device 100 via the communication part 220. However, in the first embodiment, because the signal strength measuring part 132 of the distance measuring device 100 measures RSSIs, the MCU 230 of the distance measuring device 200 does not necessarily include the signal strength measuring part 232.

### <Permission Determination Part 233>

Similar to the permission determination part 133 of the distance measuring device 100, the permission determination part 233 determines whether to permit the distance measuring device 200 to establish a communication connection via BLE of the distance measuring device 200, based on the RSSI of the advertising signal measured by the signal strength measuring part 232. If the determination is yes, the permission determination part 233 can generate a permission signal. However, in the first embodiment, the permission determination part 133 of the distance measuring device 100 performs the permission determination process. Thus, the MCU 230 of the distance measuring device 200 does not necessarily include the permission determination part 233.

### <Transmission/Reception Processing Part 234>

The transmission/reception processing part 234 transmits and receives signals to and from the distance measuring device 100 in order to acquire data such as, phase differences and frequency components, necessary for the distance measuring part 235 and the angle measuring part 236 to perform distance measurement and angle measurement.

The transmission/reception processing part 234 transmits and receives signals to and from the transmission/reception processing part 134 of the distance measuring device 100 in order to acquire data, such as a round-trip time, phase differences, and frequency components of signals, necessary for the distance measuring part 235 to perform distance measurement. That is, the distance measuring part 235 performs a distance measuring process together with the transmission/reception processing part 134 of the distance measuring device 100. The distance measuring part 235 performing the distance measuring process together with the transmission/reception processing part 134 of the distance measuring device 100 means that the distance measuring device 200 performs the distance measuring process together with the distance measuring device 100. Further, the transmission/reception processing part 234 transmits and receives signals to and from the transmission/reception processing part 134 of the distance measuring device 100 in order to acquire signals and the like necessary for the angle measuring part 236 to perform an angle measuring process. That is, the angle measuring part 236 performs the angle measuring process together with the transmission/reception processing part 134 of the distance measuring device 100. The angle measuring part 236 performing the angle measuring process together with the transmission/reception processing part 134 means that the distance measuring device 200 performs the angle measuring process together with the distance measuring device 100.

The distance measuring process of calculating the distance between the distance measuring devices 100 and 200 is performed by the distance measuring part 235 of the distance measuring device 200, and is not performed by the distance measuring part 135 of the distance measuring device 100. Further, the angle measuring process is performed by the angle measuring part 236 of the distance measuring device 200, and is not performed by the angle measuring part 136 of the distance measuring device 100. Therefore, when the distance measuring part 235 and the angle measuring part 236 perform the distance measuring process and the angle measuring process, respectively, the transmission/reception processing part 234 performs the following auxiliary processes in accordance with the processes performed by the distance measuring part 235 and the angle measuring part 236.

When the distance measuring part 235 performs RTT-based distance measurement, the transmission/reception processing part 234 transmits an RTT signal to the distance measuring device 100 via the antennas 210, and upon receiving the RTT signal from the distance measuring device 100, the transmission/reception processing part 234 measures a round-trip time that is the time it takes from transmission to reception, and outputs the measured round-trip time to the distance measuring part 235. The transmission/reception processing part 234 can transmit and receive the RTT signal by using one of the three antennas 110.

When the distance measuring part 235 performs TOA-based distance measurement, the transmission/reception processing part 234 and the transmission/reception processing part 134 of the distance measuring device 100 transmit TOA signals of a plurality of frequencies bidirectionally. In this case, the transmission/reception processing part 234 can use one of the three antennas 110 to transmit the TOA signals. The transmission/reception processing part 234 measures the phases of TOA signals received from the distance measuring device 100, uses data indicating phases received from the distance measuring device 200 to obtain round-trip phases of the TOA signals of the plurality of frequencies, and outputs data indicating phase differences for the plurality of respective frequencies to the distance measuring part 235.

When the angle measuring part 236 performs AOA-based angle measurement, the distance measuring part 235 outputs, to the angle measuring part 236, data indicating phase differences obtained when signals are received by the three antennas 210 from the distance measuring device 100 at a time when the TOA-based distance measurement is performed by the distance measuring part 235.

### <Distance Measuring Part 235>

The distance measuring part 235 can perform an RTT-based distance measuring process and a TOA-based distance measuring process. When the distance measuring part 235 performs the RTT-based distance measuring process, the distance measuring part 235 calculates the distance between the distance measuring devices 100 and 200 based on data indicating the round-trip time acquired from the transmission/reception processing part 234.

When the distance measuring part 235 performs the TOA-based distance measuring process, the distance measuring part 235 acquires the data indicating the phase differences for the plurality of respective frequencies from the transmission/reception processing part 234, and calculates the distance between the distance measuring devices 100 and 200 based on a relationship between the plurality of phase differences and the frequencies. The distance calculated by using the TOA method is significantly accurate as compared to the distance calculated by using the RTT method.

### <Angle Measuring Part 236>

The angle measuring part 236 uses the three antennas 210 to measure an elevation angle and an azimuth angle in the polar coordinate system of the position of the distance measuring device 100 with respect to the distance measuring device 200 by using the AOA method. The angle measuring part 236 measures an elevation angle and an azimuth angle by using the AOA method, based on phase differences obtained when signals transmitted from the distance measuring device 100 are received by the three antennas 210. The phase differences obtained when the signals are received by the three antennas 210 refer to a first phase difference obtained when signals are received by the two antennas 210 located on the first axis and a second phase difference obtained when signals are received by the two antennas 210 located on the second axis. Further, the angle measuring part 236 calculates an azimuth angle, which indicates the position of the distance measuring device 100 with respect to the distance measuring device 200, from the ratio between the first phase difference and the second phase difference. Further, the angle measuring part 236 calculates an elevation angle, which indicates the position of the distance measuring device 100 with respect to the distance measuring device 200, based on the azimuth angle and the first phase difference or the second phase difference. In the angle measuring process using the AOA method, the elevation angle and the azimuth angle in the polar coordinate system of the position of the distance measuring device 100 with respect to the distance measuring device 200 can be calculated.

### <Frequency Setting Part 237>

The frequency setting part 237 sets the frequency at which the distance measuring part 235 performs a distance measuring process according to a distance measured by a distance measuring process performed by the distance measuring part 235. The frequency at which the distance measuring process is performed represents the number of times the distance measuring process is performed within a predetermined period of time (for example, 60 seconds) or a time interval at which the distance measuring process is performed. If the frequency at which the distance measuring process is performed is high, it means that the number of times the distance measuring process is performed within the predetermined period of time is large, in other words, the time interval at which the distance measuring process is performed is short.

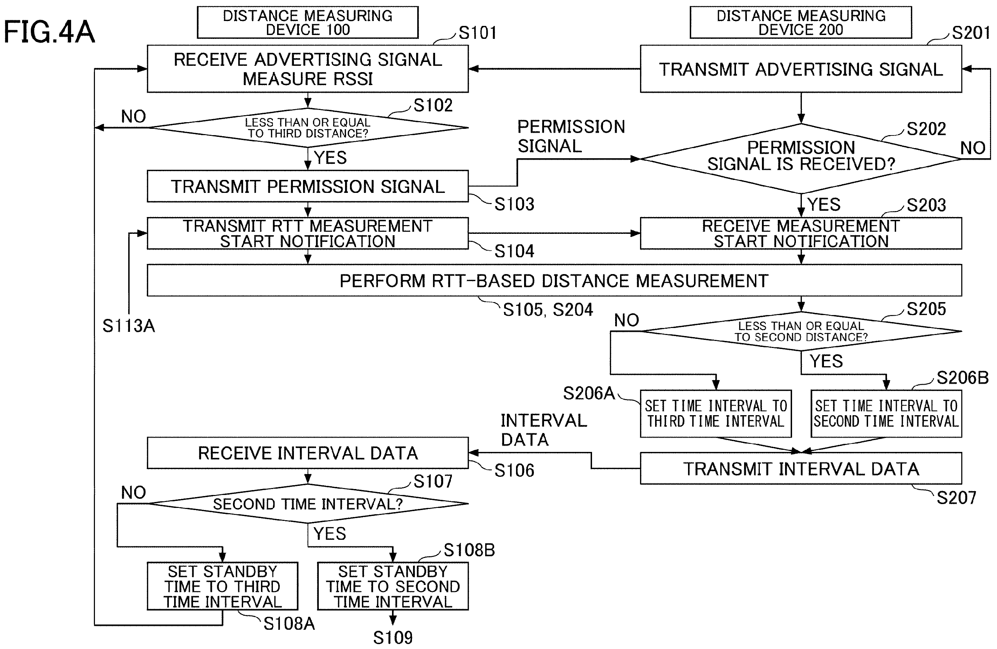

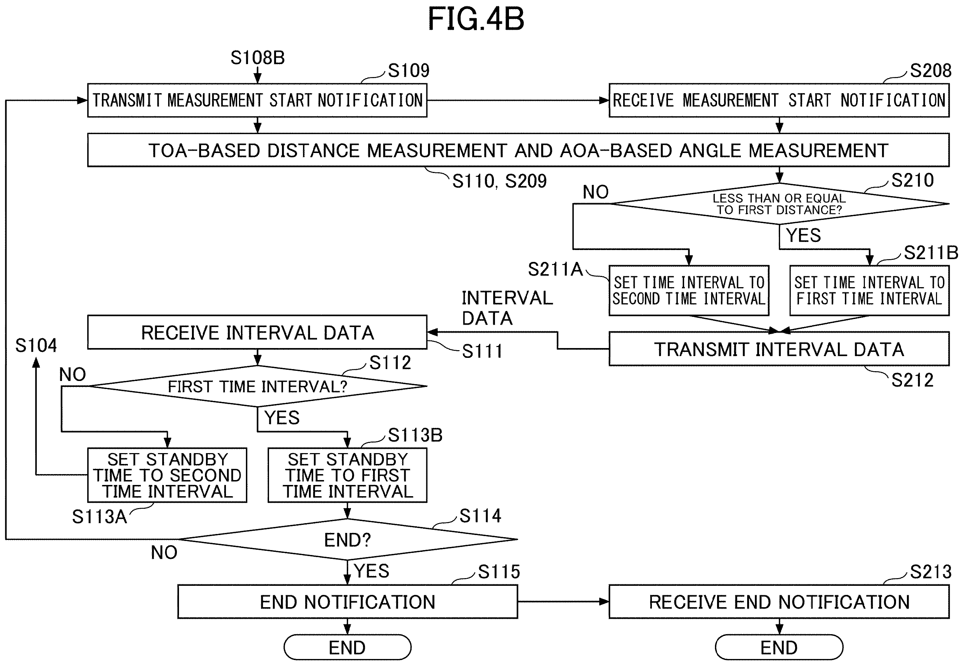

When the distance between the distance measuring devices 100 and 200 is long, the frequency at which the distance measuring process is performed may be low. This is because the smartphone 20 provided with the distance measuring device 200 is far away from the vehicle 10 provided with the distance measuring device 100, and thus it is unlikely that the owner of the smartphone 20 immediately unlocks the doors or the trunk of the vehicle 10. When the distance between the distance measuring devices 100 and 200 is short, the frequency at which the distance measuring process is performed is increased. This is because the smartphone 20 is close to the vehicle 10, and thus the owner of the smartphone 20 is likely to immediately unlock the doors or the trunk of the vehicle 10. Therefore, the frequency setting part 237 increases the frequency as the distance measured by the distance measuring part 235 decreases. Details of setting the frequency by the frequency setting part 237 according to the distance measured by the distance measuring part 235 will be described later with reference to a flowchart illustrated in FIG. 4A and FIG. 4B.

### <Memory 238>

The memory 238 stores programs, data, and the like that are necessary when the main control part 231, the signal strength measuring part 232, the permission determination part 233, the transmission/reception processing part 234, the distance measuring part 235, the angle measuring part 236, and the frequency setting part 237 perform processes.

The main control part 231 obtains the position of the distance measuring device 100 with respect to the distance measuring device 200 based on the distance obtained by the distance measuring part 235 and the angles (the elevation angle and the azimuth angle) obtained by the angle measuring part 236.

### <Overview of Overall Processing>

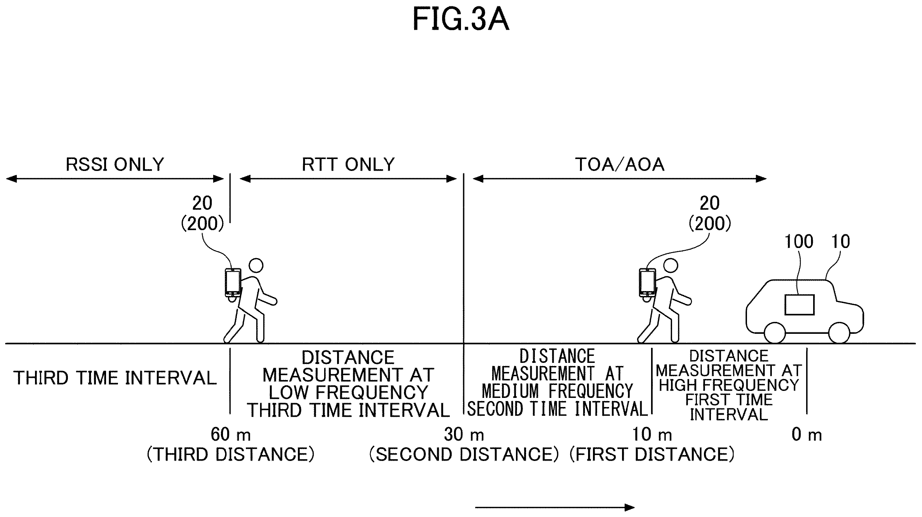

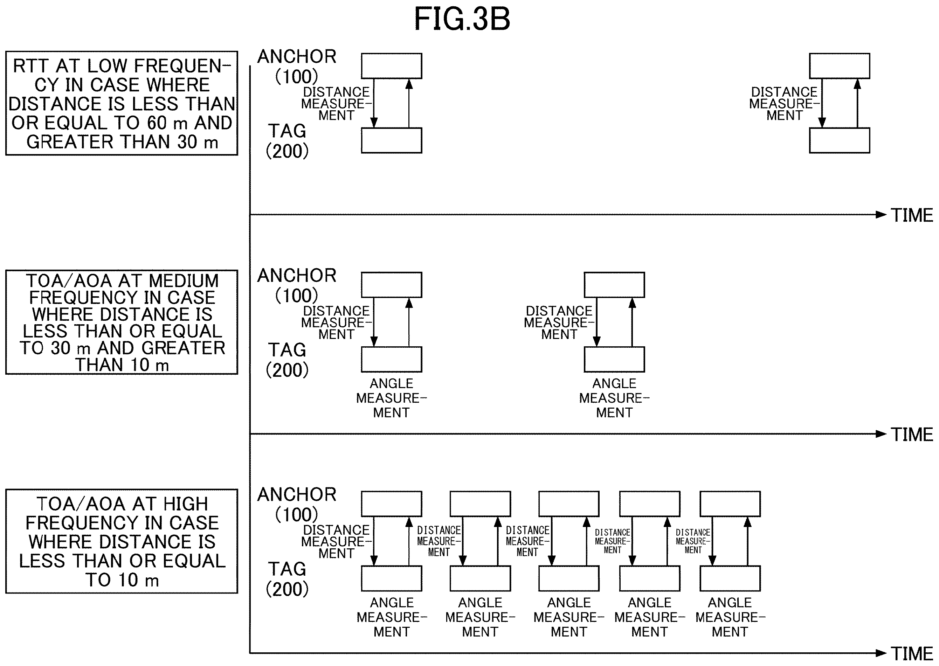

FIG. 3A is a diagram illustrating an example of an overview of overall processing performed by the distance measuring devices 100 and 200. FIG. 3B is a diagram illustrating an example of the frequency of each distance measuring process. FIG. 3A illustrates a state in which the owner of the smartphone 20 is walking toward the vehicle 10. FIG. 3B illustrates the frequency of each distance measuring process performed by the distance measuring devices 100 and 200 in time series. In FIG. 3B, the distance measuring device 100 is an anchor (fixed station), the distance measuring device 200 is a tag (mobile station), and the horizontal axis is a time axis.

As illustrated in FIG. 3A, as an example, thresholds of 60 m (an example of a third distance), 30 m (an example of a second distance) and 10 m (an example of a first distance) are set for the distance between the distance measuring device 100 of the vehicle 10 and the distance measuring device 200. The second distance is an example of a first predetermined distance, and the first distance is an example of a second predetermined distance.

Further, the frequency (time interval) at which an RSSI measuring process is performed by the signal strength measuring part 132 or an RTT-based distance measuring process or a TOA-based distance measuring process is performed by the distance measuring part 135 is set according to the distance between the distance measuring devices 100 and 200. In the following, a first time interval, a second time interval, and a third time interval are used. The first time interval is the shortest and the third time interval is the longest. That is, the relationship of the first time interval < the second time interval < the third time interval is established. The first time interval, the second time interval, and the third time interval can be represented by a high frequency, a medium frequency, and a low frequency, respectively.

### <In Case where Distance between Distance Measuring Devices 100 and 200 is Greater Than 60 m>

For example, in a case where the distance between the distance measuring devices 100 and 200 is greater than 60 m, the distance measuring part 235 of the distance measuring device 200 does not perform any distance measuring process, and the signal strength measuring part 132 of the distance measuring device 100 only measures the RSSI of an advertising signal output from the distance measuring device 200. The RSSI is measured at the longest third time interval. Because the distance between the distance measuring devices 100 and 200 is sufficiently long, it is unlikely that the owner of the smartphone 20 immediately unlocks the doors or the trunk of the vehicle 10. In such a situation, the power consumption of the distance measuring devices 100 and 200 can be reduced by not performing any distance measuring process.

Further, because the signal strength measuring part 132 of the distance measuring device 100 only measures the RSSI of the advertising signal, the processing load of the distance measuring devices 100 and 200 is small. Thus, the responsiveness of the distance measuring devices 100 and 200 can be improved. In particular, if there are a plurality of distance measuring devices 200, it is useful that the distance measuring device 100 has high responsiveness.

### <In Case Where Distance Between Distance Measuring Devices 100 and 200 is Less Than or Equal to 60 m and Greater Than 30 m>

Further, for example, in a case where the distance between the distance measuring devices 100 and 200 is less than or equal to 60 m and greater than 30 m, the distance measuring part 235 of the distance measuring device 200 performs the RTT-based distance measuring process at the third time interval (at the low frequency). Performing the distance measuring process at the longest third time interval corresponds to performing the distance measuring process at the low frequency. For example, when the distance measuring process is performed at the low frequency, the time interval at which the distance measuring process is performed is very long as illustrated in FIG. 3B. The third time interval is, for example, 100 seconds.

The RTT-based distance measuring process is a process in which the distance measuring device 200 transmits an RTT signal to the distance measuring device 100 once, and the distance measuring device 100, which has received the RTT signal, returns the RTT signal to the distance measuring device 200 once, thereby obtaining the distance between the distance measuring devices 100 and 200 based on the round-trip time of the RTT signal between the distance measuring devices 100 and 200. Because each of the distance measuring devices 100 and 200 only transmits the RTT signal once, the processing load of the distance measuring devices 100 and 200 is small. Thus, the distance measuring process can be performed in a short period of time. However, the accuracy of the RTT-based distance measuring process is lower than that of the TOA-based distance measuring process.

If the distance between the distance measuring devices 100 and 200 is relatively long, it is difficult to consider that the owner of the smartphone 20 immediately unlocks the doors or the trunk of the vehicle 10. Therefore, in a case where the distance measured by using the RTT method is less than or equal to 60 m and greater than 30 m, the RTT-based distance measuring process, which places less small processing load on the distance measuring devices 100 and 200, is performed without performing the TOA-based distance measuring process, which is a part of an authentication process. As a result, the power consumption of the distance measuring devices 100 and 200 can be reduced. Further, it is unlikely that the owner of the smartphone 20 immediately unlocks the doors or the trunk of the vehicle 10, and the necessity of the authentication process is low. Therefore, the authentication process including the TOA-based distance measuring process is not performed, and as a result, the power consumption of the distance measuring devices 100 and 200 is reduced.

In addition, because the processing load on the distance measuring devices 100 and 200 is small, the responsiveness of the distance measuring devices 100 and 200 can be improved. In particular, if there are a plurality of distance measuring devices 200, it is useful that the distance measuring device 100 has high responsiveness.

### <In Case where Distance Between Distance Measuring Devices 100 and 200 is Less Than or Equal to 30 m and Greater Than 10 m>

For example, in a case where the distance between the distance measuring devices 100 and 200 is less than or equal to 30 m and greater than 10 m, the distance measuring part 235 of the distance measuring device 200 performs the TOA-based distance measuring process at the second time interval (medium frequency). Performing the distance measuring process at the second time interval corresponds to performing the distance measuring process at the medium frequency. As an example, the second time interval at which the distance measuring process is performed at the medium frequency as illustrated in the middle part of FIG. 3B is shorter than the third time interval at the low frequency as illustrated in the upper part of FIG. 3B, and is longer than the first time interval at the high frequency as illustrated in the lower part of FIG. 3B. The second time interval is, for example, 10 seconds.

Further, in a case where the distance between the distance measuring devices 100 and 200 is less than or equal to 30 m and greater than 10 m, the angle measuring part 236 measures an elevation angle and an azimuth angle by using the AOA method at the second time interval (medium frequency), based on phase differences obtained when signals transmitted from the distance measuring device 100 are received by the three antennas 210.

In a case where the distance obtained by TOA-based distance measurement is less than or equal to 30 m and greater than 10 m, it is still difficult to consider that the owner of the smartphone 20 immediately unlocks the doors or the trunk of the vehicle 10. This is because, when it is assumed that the moving speed of a person is approximately 1 m/s to 4 m/s, it is considered that it takes several seconds for the owner of the smartphone 20 to reach the vehicle 10 when the distance is greater than 10 m. In the TOA-based distance measurement, because signals of a plurality of frequencies are transmitted bidirectionally between the distance measuring devices 100 and 200, the processing load on the distance measuring devices 100 and 200 is relatively large. However, reducing the frequency at which the distance measuring process is performed allows the power consumption of the distance measuring devices 100 and 200 to be reduced and the responsiveness of the distance measuring devices 100 and 200 to be improved. In particular, if there are a plurality of distance measuring devices 200, it is useful that the distance measuring device 100 has high responsiveness. Further, in a case where the distance obtained by the TOA-based distance measurement is less than or equal to 30 m and greater than 10 m, the elevation angle and the azimuth angle are measured by using the AOA method at the medium frequency.

### <In Case where Distance Between Distance Measuring Devices 100 and 200 is Less Than or Equal to 10 m>

For example, in a case where the distance between the distance measuring devices 100 and 200 is less than or equal to 10 m, the distance measuring part 235 of the distance measuring device 200 performs the TOA-based distance measuring process at the first time interval (high frequency). Performing the distance measuring process at the first time interval corresponds to performing the distance measuring process at the high frequency. For example, the time interval at which the distance measuring process is performed at the high frequency as illustrated in the lower part of FIG. 3B is shorter than the time intervals at the low frequency and the medium frequency as illustrated in the upper part and the middle part of FIG. 3B. When the distance measuring process is performed at the first time interval, the distance measuring process is repeatedly performed with little standby time. The first time interval is, for example, 0.1 seconds.

Further, in a case where the distance between the distance measuring devices 100 and 200 is less than or equal to 10 m, the angle measuring part 236 measures an elevation angle and an azimuth angle by using the AOA method at the first time interval (high frequency), based on phase differences obtained when signals transmitted from the distance measuring device 100 are received by the three antennas 210.

In a case where the distance obtained by TOA-based distance measurement is less than or equal to 10 m, the owner of the smartphone 20 is likely to immediately unlock the doors or the trunk of the vehicle 10. Therefore, the frequency at which the TOA-based distance measuring process is performed is increased, the authentication process is performed at a high frequency, and the elevation angle and the azimuth angle are measured by using the AOA method at a high frequency.

### <Flowchart>

FIG. 4A and FIG. 4B are diagrams illustrating a flowchart of an example of processing performed by the distance measuring devices 100 and 200. The relationship between processing performed by the distance measuring device 100 and processing performed by the distance measuring device 200 will also be described by illustrating the processing performed by the distance measuring device 100 on the left half of FIG. 4A and FIG. 4B and the processing performed by the distance measuring device 200 on the right half FIG. 4A and FIG. 4B.

Upon the processing being started, first, the distance measuring device 200 serving as the tag transmits an advertising signal (step S201). Note that processing of the distance measuring devices 100 and 200 start when, for example, the distance measuring device 200 transmits a start notification to the distance measuring device 100 and the distance measuring device 100 receives the start notification.

The distance measuring device 200 serving as the anchor receives the advertising signal and measures an RSSI (step S101). The signal strength measuring part 132 measures the RSSI.

The distance measuring device 100 estimates the distance between the distance measuring devices 100 and 200 based on the measured RSSI, and determines whether the estimated distance is less than or equal to the third distance (step S102). This step is performed by the permission determination part 133. The third distance is, for example, 60 m.

If the distance measuring device 100 determines that the estimated distance is less than or equal to the third distance (YES in S102), the distance measuring device 100 generates a permission signal and transmits the permission signal to the distance measuring device 200 (step S103). The permission signal is generated by the permission determination part 133.

If the distance measuring device 100 determines that the estimated distance is not less than or equal to the third distance in step S102 (NO in S102), the distance measuring device 100 causes the flow to return to step S101. In this case, an advertising signal is received again and an RSSI is measured again.

Upon transmitting the permission signal to the distance measuring device 200, the distance measuring device 100 transmits a measurement start notification to start an RTT-based distance measuring process to the distance measuring device 200 (step S104). The measurement start notification to start the RTT-based distance measuring process is a notification indicating that the RTT-based distance measuring process is performed. As an example, step S104 is performed by the transmission/reception processing part 134 of the distance measuring device 100.

Upon the distance measuring device 100 transmitting the measurement start notification to start the RTT-based distance measuring process, the distance measuring device 100 performs the RTT-based distance measuring process together with the distance measuring device 200 (step S105). As an example, step S105 is performed by the transmission/reception processing part 134 of the distance measuring device 100.

The distance measuring device 200 determines whether the permission signal is received within a predetermined period of time after the transmission of the advertisement signal (step S202). The predetermined period of time is, for example, 0.01 seconds. If the permission signal is not received within the predetermined period of time, a timeout occurs. As an example, step S202 is performed by the main control part 231 of the distance measuring device 200.

If the distance measuring device 200 determines that the permission signal is received within the predetermined period of time (YES in S202), the distance measuring device 200 receives the measurement start notification to start the RTT-based distance measuring process (step S203). As an example, step S203 is performed by the main control part 231 of the distance measuring device 200.

If the distance measuring device 200 determines that the permission signal is not received within the predetermined period of time in step S202 (NO in S202), the distance measuring device 200 causes the flow to return to step S201. In this case, an advertisement signal is transmitted again and the processing is performed again.

Upon receiving the measurement start notification to start the RTT-based distance measuring process, the distance measuring device 200 performs the RTT-based distance measuring process together with the distance measuring device 100 (step S204). Step S204 is performed integrally with step S105 performed by the distance measuring device 100, and step S105 and step S204 are performed by the transmission/reception processing part 134 of the distance measuring device 100 and the transmission/reception processing part 234 and the distance measuring part 235 of the distance measuring device 200. Specifically, the transmission/reception processing part 234 transmits an RTT signal, the transmission/reception processing part 134 sends back the RTT signal, and the distance measuring part 235 measures the distance between the distance measuring devices 100 and 200 by using the RTT method, based on a round-trip time acquired by the transmission/reception processing part 234. In step S204, the distance between the distance measuring devices 100 and 200 is calculated by the RTT-based distance measuring process.

Upon the RTT-based distance measuring process in steps S105 and S204 being completed, the distance measuring device 200 determines whether the measured distance is less than or equal to the second distance (step S205). As an example, step S205 is performed by the frequency setting part 237 of the distance measuring device 200.

If the distance measuring device 200 determines that the measured distance is not equal to or less than the second distance (NO in S205), the distance measuring device 200 sets the time interval at which distance measurement is performed to the third time interval (step S206A). If the measured distance is not equal to or less than the second distance, the measured distance corresponds to the third distance, and thus, the time interval is set to the third time interval corresponding to the third distance. As an example, step S206A is performed by the frequency setting part 237 of the distance measuring device 200.

If the distance measuring device 200 determines that the measured distance is less than or equal to the second distance in step S205 (YES in S205), the distance measuring device 200 sets the time interval at which distance measurement is performed to the second time interval (step S206B). If the measured distance is less than or equal to the second distance, the measured distance corresponds to the distance 2 or the distance 1, and the time interval is provisionally set to the second time interval corresponding to the second distance. As an example, step S206B is performed by the frequency setting part 237 of the distance measuring device 200.

Upon completion of step S206A or S206B, the distance measuring device 200 transmits interval data indicating the time interval set in step S206A or S206B to the distance measuring device 100 (step S207). As an example, step S207 is performed by the main control part 231 of the distance measuring device 200.

The distance measuring device 100 receives the interval date from the distance measuring device 200 (step S106). As an example, step S106 is performed by the main control part 131 of the distance measuring device 100.

The distance measuring device 100 determines whether the time interval indicated by the interval data received in step S106 is the second time interval (step S107). As an example, step S107 is performed by the main control part 131 of the distance measuring device 100.

If the distance measuring device 100 determines that the time interval indicated by the received interval data is not the second time interval (NO in S107), the distance measuring device 100 sets the standby time of the distance measuring device 100 to the third time interval (step S108A). As an example, step S108A is performed by the main control part 131. Upon completion of step S108A, the distance measuring device 100 returns the flow to step S101. In this case, RSSI measurement is performed again.

If the distance measuring device 100 determines that the time interval indicated by the received interval data is the second time interval in step S107 (YES in S107), the distance measuring device 100 sets the standby time of the distance measuring device 100 to the second time interval (step S108B). Upon completion of step S108B, the distance measuring device 100 causes the flow to proceed to step S109. As an example, step S108B is performed by the main control part 131.

The distance measuring device 100 transmits a measurement start notification to start a TOA-based distance measuring process and an AOA-based angle measuring process to the distance measuring device 200 (step S109). The measurement start notification to start the TOA-based distance measuring process and the AOA-based angle measuring process is a notification indicating that the TOA-based distance measuring process and the AOA-based angle measuring process are performed. As an example, step S109 is performed by the transmission/reception processing part 134 of the distance measuring device 100.

Upon transmitting the measurement start notification to start the TOA-based distance measuring process and the AOA-based angle measuring process, the distance measuring device 100 performs the TOA-based distance measuring process together with the distance measuring device 200 (step S110). As an example, step S110 is performed by the transmission/reception processing part 134 of the distance measuring device 100.

The distance measuring device 200 receives the measurement start notification to start the TOA-based distance measuring process and the AOA-based angle measuring process (step S208). As an example, step S208 is performed by the main control part 231 of the distance measuring device 200.

Upon receiving the start notification of the TOA-based distance measuring process and the AOA-based angle measuring process, the distance measuring device 200 performs the TOA-based distance measuring process together with the distance measuring device 100, and performs the AOA-based angle measuring process when receiving signals from the distance measuring device 100 (step S209). The distance measuring process in step S209 is performed integrally with step S110 performed by the distance measuring device 100, and is performed by the transmission/reception processing part 134 of the distance measuring device 100 and the transmission/reception processing part 234 and the distance measuring part 235 of the distance measuring device 200. Specifically, the transmission/reception processing part 234 sequentially transmits TOA signals of a plurality of frequencies, the transmission/reception processing part 134 sequentially sends back the TOA signals of the same frequencies, and the transmission/reception processing part 134 transmits, to the distance measuring device 200, phase data indicating phases when the signals are received. The AOA-based angle measuring process performed in step S209 is a process in which the distance measuring device 200 measures a first phase difference and a second phase difference when receiving the TOA signals from the distance measuring device 100, and measures an azimuth angle and an elevation angle, indicating the position of the distance measuring device 100 with respect to the distance measuring device 200, based on the first phase difference and the second phase difference.

Further, the distance measuring device 200 transmits data indicating the distance and the angles obtained in the distance measuring process and the angle measuring process in step S209 to the distance measuring device 100. Such data may be transmitted by the transmission/reception processing part 234, for example.

The distance measuring part 235 of the distance measuring device 200 acquires, for each of the plurality of frequencies, a round-trip phase difference obtained by summing a phase when a signal is received by the transmission/reception processing part 234 from the distance measuring device 100 and a phase indicated by the phase data received from the distance measuring device 100. The distance measuring part 235 measures the distance between the distance measuring devices 100 and 200 by using the TOA method, based on the relationship between the plurality of frequencies and round-trip phase differences at the plurality of frequencies. In step S209, the distance between the distance measuring devices 100 and 200 is calculated by the TOA-based distance measuring process. The accuracy of TOA-based distance measurement is much higher than the accuracy of the RTT-based distance measurement. Further, in step S209, the angle measuring part 236 of the distance measuring device 200 measures the elevation angle and the azimuth angle by using the AOA method at the first time interval (high frequency), based on the phase differences when the three antennas 210 receive the TOA signals transmitted from the distance measuring device 100.

Upon the TOA-based distance measuring process and the AOA-based angle measuring process in steps S110 and S209 being completed, the distance measuring device 200 determines whether the measured distance is less than or equal to the first distance (step S210). As an example, step S210 is performed by the frequency setting part 237 of the distance measuring device 200.

If the distance measuring device 200 determines that the measured distance is not less than or equal to the first distance (NO in S210), the distance measuring device 200 sets the time interval at which distance measurement is performed to the second time interval (step S211A). If the measured distance is not less than or equal to the first distance, the measured distance is greater than the first distance and less than or equal to the second distance, and thus the time interval is set to the second time interval. As an example, step S211A is performed by the frequency setting part 237 of the distance measuring device 200.

If the distance measuring device 200 determines that the measured distance is less than or equal to the first distance in S210 (YES in S210), the distance measuring device 200 sets the time interval at which distance measurement is performed to the first time interval (step S211B). If the measured distance is less than or equal to the first distance, the time interval is set to the first time interval. As an example, step S211B is performed by the frequency setting part 237 of the distance measuring device 200.

Upon completion of step S211A or S211B, the distance measuring device 200 transmits interval data indicating the time interval set in step S211A or S211B to the distance measuring device 100 (step S212). As an example, step S212 is performed by the main control part 231 of the distance measuring device 200.

The distance measuring device 100 receives the interval data from the distance measuring device 200 (step S111). As an example, step S111 is performed by the main control part 131 of the distance measuring device 100.

The distance measuring device 100 determines whether the time interval indicated by the interval data received in step S111 is the first time interval (step S112). As an example, step S112 is performed by the main control part 131 of the distance measuring device 100.

If the distance measuring device 100 determines that the time interval indicated by the received interval data is not the first time interval (NO in S112), the distance measuring device 100 sets the standby time of the distance measuring device 100 to the second time interval (step S113A). Step S113A is performed by the main control part 131. Upon completion of step S113A, the distance measuring device 100 causes the flow to return to step S104, and the RTT-based distance measuring process is performed again.

If the distance measuring device 100 determines that the time interval indicated by the received interval data is the first time interval in S112 (YES in S112), the distance measuring device 100 sets the standby time of the distance measuring device 100 to the first time interval (step S113B). Step S113B is performed by the main control part 131.

Upon completion of step S113B, the distance measuring device 100 determines whether to end the processing (step S114). For example, the processing ends when an authentication process is successfully completed. Step S114 is performed by the main control part 131. In the authentication process, the data indicating the distance and the angles obtained by the distance measuring device 200 in the distance measuring process and the angle measuring process in step S209 and transmitted to the distance measuring device 100 are used.

If the distance measuring device 100 determines not to end the processing (NO in S114), the distance measuring device 100 causes the flow to return to step S109. In this case, the TOA-based distance measuring process and the AOA-based angle measuring process are performed at the first time interval corresponding to the high frequency.

If the distance measuring device 100 determines to end the processing (YES in S114), the distance measuring device 100 transmits an end notification to end the series of processing, to the distance measuring device 200 (step S115). Upon transmitting the end notification to the distance measuring device 200, the distance measuring device 100 ends the series of processing (END).

Upon receiving the end notification from the distance measuring device 100, the distance measuring device 200 ends the series of processing (END).

### <Effects>

The distance measuring system 300 according to the first embodiment includes the distance measuring device 100 and the distance measuring device 200. The distance measuring device 200 includes the distance measuring part 235 configured to perform a distance measuring process of measuring a distance between the distance measuring devices 100 and 200 based on a result obtained from a signal transmitted bidirectionally between the distance measuring devices 100 and 200; and the frequency setting part 237 configure to set a frequency at which the distance measuring process is performed by the distance measuring part 235 according to the distance measured by the distance measuring part 235. Therefore, the frequency at which the distance measuring part 235 performs the distance measuring process can be set according to the distance measured by the distance measuring part 235.

Accordingly, the measurement frequency can be set according to the measured distance, thereby making it possible to provide the distance measuring system 300 that can perform distance measurement with high accuracy. Further, because the measurement frequency is set according to the measured distance, the power consumption of the distance measuring devices 100 and 200 can be reduced according to the measured distance.

Further, the distance measuring device 200 is movable with respect to the distance measuring device 100. Therefore, when the distance between the distance measuring devices 100 and 200 changes due to the movement of the distance measuring device 200 with respect to the distance measuring device 100, the measurement frequency can be set according to the measured distance. Accordingly, the distance measuring system 300 that can perform distance measurement with high accuracy can be provided.

Further, the frequency setting part 237 increases the frequency as the distance measured by the distance measuring part 235 decreases. Therefore, the distance measuring process can be performed at a higher frequency as the distance between the distance measuring devices 100 and 200 decreases. Therefore, the distance measuring system 300 that can perform distance measurement at a higher frequency as the distance between the distance measuring devices 100 and 200 decreases can be provided. Further, a lower measurement frequency can be set as the measured distance increases. Thus, the power consumption of the distance measuring devices 100 and 200 can be reduced as the measured distance increases.

The distance measuring device 100 includes the signal strength measuring part 132 configured to perform a signal strength measuring process of measuring a signal strength (RSSI) of a signal received from the distance measuring device 200; and the permission determination part 133 configured to permit the distance measuring part 235 of the distance measuring device 200 to perform the distance measuring process when the signal strength measured by the signal strength measuring part 132 is greater than or equal to a predetermined strength. This allows the distance measuring part 235 to perform the distance measuring process when the RSSI of the signal transmitted from the distance measuring device 200 is greater than or equal to the predetermined value, that is, the distance measuring device 200 approaches the distance measuring device 100 to some extent, and allows the distance measuring part 235 not to perform the distance measuring process when the RSSI of the signal transmitted from the distance measuring device 200 is less than the predetermined value. If the distance between the distance measuring devices 100 and 200 is sufficiently long, it is unlikely that an owner of a device (for example, the smartphone 20) provided with the distance measuring device 200 immediately comes into contact with a device (for example, the vehicle 10) provided with the distance measuring device 100. In such a situation, the power consumption of the distance measuring devices 100 and 200 can be reduced by not performing the distance measuring process, which is a part of an authentication process of the distance measuring device 200.

Upon the distance between the distance measuring devices 100 and 200 being less than or equal to the first predetermined distance (second distance), the distance measuring part 235 measures a distance between the distance measuring devices 100 and 200 by using the TOA method, based on a relationship between round-trip phase differences and a plurality of frequencies. The relationship is obtained by transmitting signals of the plurality of frequencies bidirectionally between the distance measuring devices 100 and 200. Therefore, when the distance between the distance measuring devices 100 and 200 becomes short to some extent (less than or equal to the second distance), distance measurement can be performed with high accuracy by using the TOA method. The TOA-based distance measuring process includes many processing steps in order to obtain the relationship between the round-trip phase differences and the plurality of frequencies, and thus the power consumption of the distance measuring devices 100 and 200 increases. In view of this, in the present embodiment, the TOA-based distance measuring process, which requires large power consumption, is performed only when the distance between the distance measuring devices 100 and 200 is less than or equal to the second distance. Accordingly, the power consumption of the distance measuring devices 100 and 200 can be reduced.

In a case where the distance between the distance measuring devices 100 and 200 is not less than or equal to the first predetermined distance (second distance), the distance measuring part 235 measures a distance between the distance measuring devices 100 and 200 by using the RTT method, based on a round-trip time of a signal sent back and forth between the distance measuring device 100 and the distance measuring device 200. Therefore, when the distance between the distance measuring devices 100 and 200 is moderately short, the distance between the distance measuring devices 100 and 200 can be roughly measured by using the RTT method. Further, the RTT-based distance measuring process only requires a single round trip of a signal between the distance measuring devices 100 and 200, and thus can be performed with less power consumption as compared to the TOA-based distance measuring process. Therefore, in a case where the distance between the distance measuring devices 100 and 200 is not less than or equal to the first predetermined distance (second distance), the power consumption of the distance measuring devices 100 and 200 can be reduced by using the RTT-based distance measuring process.

Further, upon the distance between the distance measuring devices 100 and 200 being less than or equal to the first predetermined distance (second distance), the frequency setting part 237 sets the frequency, at which the distance measuring process is performed by the distance measuring part 235, higher than when the distance between the distance measuring devices 100 and 200 is not less than or equal to the first predetermined distance. Therefore, when the distance between the distance measuring devices 100 and 200 is not less than or equal to the first predetermined distance, the RTT-based distance measuring process can be performed at a low frequency. When the distance between the distance measuring devices 100 and 200 is less than or equal to the first predetermined distance (second distance), the TOA-based distance measuring process can be performed at a high frequency. When the distance between the distance measuring devices 100 and 200 is not less than or equal to the first predetermined distance, the necessity to perform distance measurement is low. Thus, the RTT-based distance measuring process with low power consumption is used and the frequency at which the RTT-based distance measuring process is performed is lowered. As a result, power consumption can be further reduced. When the distance between the distance measuring devices 100 and 200 is less than or equal to the first predetermined distance (second distance), the necessity to perform distance measurement is high. Thus, the TOA-based distance measuring process with high measurement accuracy can be performed at a high frequency, thus making it possible to perform highly-accurate distance measurement at a high frequency.

Further, upon the distance between the distance measuring devices 100 and 200 being less than or equal to the second predetermined distance (first distance) that is shorter than the first predetermined distance, the frequency setting part 237 sets the frequency, at which the distance measuring process is performed by the distance measuring part 235, higher than when the distance between the distance measuring devices 100 and 200 is not less than or equal to the second predetermined distance. Therefore, in a case where the distance between the distance measuring devices 100 and 200 is less than or equal to the first predetermined distance (second distance), the frequency at which the TOA-based distance measuring process is performed can be changed according to whether the distance is less than or equal to the first distance. When the distance measuring device 200 approaches the distance measuring device 100 and the distance between the distance measuring devices 100 and 200 becomes less than or equal to the first distance, the distance between the distance measuring devices 100 and 200 can be measured by using the TOA method with high accuracy at a high frequency. Further, by changing the frequency at which the distance measuring process is performed according to whether the distance is less than or equal to the first distance when the distance between the distance measuring devices 100 and 200 is less than or equal to the first predetermined distance (second distance), it is possible to reduce the power consumption of the distance measuring devices 100 and 200 in a case where the distance between the distance measuring devices 100 and 200 is greater than the first distance.

The distance measuring device 200 further includes the plurality of antennas 210 and the angle measuring part 236 configured to perform, when the signals of the plurality of frequencies are transmitted bidirectionally between the distance measuring devices 100 and 200, an angle measuring process of measuring an angle indicating a position of the distance measuring device 100 with respect to the distance measuring device 200 based on phase differences obtained when the signals are received by the plurality of antennas 210 of the distance measuring device 200 from the distance measuring device 100. Therefore, the angles (the azimuth angle and the elevation angle) of the distance measuring device 100 with respect to the distance measuring device 200 can be obtained.

Further, the distance measuring system 300 includes the distance measuring device 100 and the distance measuring device 200. The distance measuring device 100 or the distance measuring device 200 includes the distance measuring part (135 or 235) configured to perform a distance measuring process of measuring a distance between the distance measuring device 100 and the distance measuring device 200, based on a result obtained from a signal bidirectionally transmitted between the distance measuring device 100 and the distance measuring device 200. The distance measuring device 100 or the distance measuring device 200 includes the frequency setting part (137 or 237) configured to set a frequency at which a distance measuring process is performed by the distance measuring part (135 or 235) according to the distance measured by a distance measuring process. Therefore, the frequency at which the distance measuring process is performed by the distance measuring part (135 or 235) can be set according to the distance measured by the distance measuring part (135 or 235).

Accordingly, the measurement frequency can be set according to the measured distance, thereby making it possible to provide the distance measuring system 300 that can perform distance measurement with high accuracy. Further, because the measurement frequency is set according to the measured distance, the power consumption of the distance measuring devices 100 and 200 can be reduced according to the measured distance. Either the distance measuring device 100 or the distance measuring device 200 can include the distance measuring part (135 or 235) and the frequency setting part (137 or 237).

The communication station (distance measuring device 200) according to the first embodiment is the communication station (distance measuring device 200) that can communicate with the distance measuring device 100. The distance measuring device 200 includes the distance measuring part 235 configured to perform a distance measuring process of measuring a distance between the distance measuring devices 100 and 200 based on a result obtained from a signal transmitted bidirectionally between the distance measuring devices 100 and 200; and the frequency setting part 237 configure to set a frequency at which the distance measuring process is performed by the distance measuring part 235 according to the distance measured by the distance measuring part 235. Therefore, the frequency at which the distance measuring process is performed by the distance measuring part 235 can be set according to the distance measured by the distance measuring part 235.

Accordingly, the measurement frequency can be set according to the measured distance, thereby making it possible to provide the distance measuring device 200 that can perform distance measurement with high accuracy.

A distance measuring method according to the first embodiment is performed by the distance measuring system 300 including the distance measuring device 100 and the distance measuring device 200. The distance measuring method includes performing a distance measuring process of measuring a distance between the distance measuring device 100 and the distance measuring device 200 based on a result obtained from a signal bidirectionally transmitted between the distance measuring device 100 and the distance measuring device 200, and setting a frequency at which the distance measuring process is performed according to the distance measured in the distance measuring process. Therefore, the frequency at which the distance measuring process is performed by the distance measuring part 235 can be set according to the distance measured by the distance measuring part 235.

Accordingly, the measurement frequency can be set according to the measured distance, and thus the distance measuring method by which distance measurement can be measured with high accuracy can be provided.

In the above description, a configuration in which the distance measuring device 100 measures the RSSI of an advertising signal transmitted from the distance measuring device 200, and the distance measuring device 200 performs a distance measuring process has been described. However, the distance measuring device 200 may measure the RSSI of an advertising signal transmitted from the distance measuring device 100, and the distance measuring device 100 may perform a distance measuring process.

Further, in the above description, a configuration in which, upon the distance between the distance measuring devices 100 and 200 being less than or equal to the third distance, the distance measuring part 235 of the distance measuring device 200 performs the RTT-based distance measuring process has been described. However, the distance measuring part 235 may perform only the TOA-based distance measuring process without performing the RTT-based distance measuring process. In this case, the frequency at which the TOA-based distance measuring process is performed may be changed according to whether the distance between the distance measuring devices 100 and 200 is less than or equal to the first distance. In this case, the distance measuring device 100 may measure the RSSI of an advertising signal until the distance between the distance measuring devices 100 and 200 becomes the second distance.

Further, the MUC 230 of the distance measuring device 200 does not necessarily include the angle measuring part 236. In such a case, the distance measuring device 200 need not perform the angle measuring process.

### <Modification>

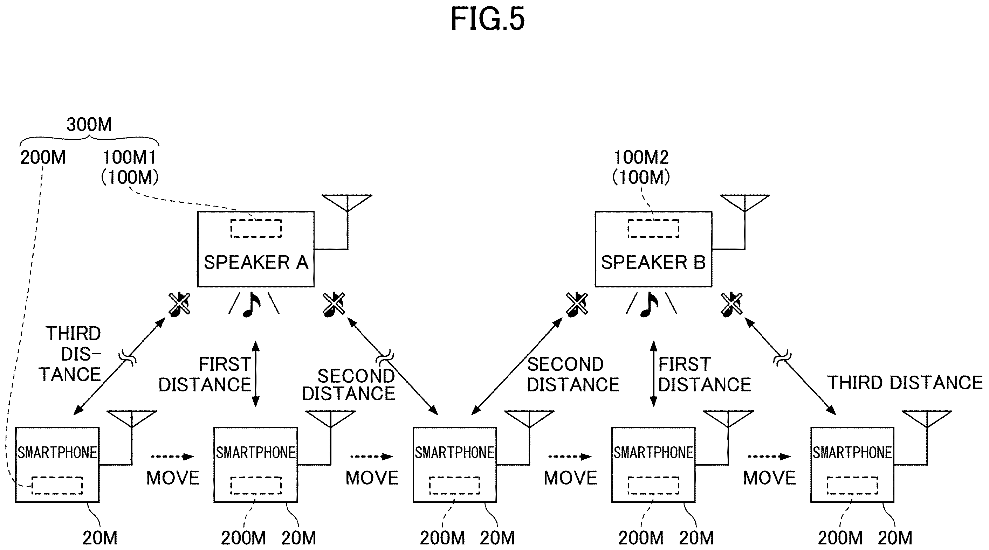

FIG. 5 is a diagram illustrating an example of a configuration in which a distance measuring system 300M according to a modification of the first embodiment is applied to a speaker system. The distance measuring system 300M includes a distance measuring device 100M and a distance measuring device 200M.

FIG. 5 illustrates a state in which two speakers A and B included in the speaker system are arranged. The speakers A and B of the speaker system operate according to the positional relationship with a smartphone 20M. Therefore, in FIG. 5, a state in which the smartphone 20M is being moved with respect to the two speakers A and B is illustrated. Although the smartphone 20M is depicted at five positions according to the movement of the smartphone 20M, one smartphone 20M is provided for the two speakers A and B.

The speakers A and B include distance measuring devices 100M1 and 100M2, respectively. The distance measuring devices 100M1 and 100M2 are similar to the distance measuring device 100 illustrated in FIG. 2, and each can measure the RSSI of an advertising signal transmitted from the distance measuring device 200. When the distance measuring devices 100M1 and 100M2 are not particularly distinguished from each other, the distance measuring devices 100M1 and 100M2 are simply referred to as the distance measuring device 100M. It is sufficient that one of the speakers A and B is provided, and the number of distance measuring devices 100M included in the distance measuring system 300M may be one.

Further, the smartphone 20M includes the distance measuring device 200M. The distance measuring device 200M is similar to the distance measuring device 200 illustrated in FIG. 2, communicates with each of the distance measuring devices 100M1 and 100M2, and can perform a distance measuring process of measuring the distance between the distance measuring devices 100 and 200 and an angle measuring process of obtaining angles (an azimuth angle and an elevation angle) of the distance measuring device 100 with respect to the distance measuring device 200.

As an example, when the smartphone 20M is moved, a signal strength measuring part 132 of the distance measuring device 100M measures the RSSI of an advertising signal transmitted from the distance measuring device 200M. When the distance between the distance measuring devices 100M and 200M is greater than the third distance, only the RSSI is measured, and the distance measuring device 200M does not perform a distance measuring process.

When the smartphone 20M is moved and the distance between the distance measuring devices 100M and 200M becomes less than or equal to the third distance, the distance measuring device 200M performs an RTT-based distance measuring process, and when the distance becomes less than or equal to the second distance, the distance measuring device 200M performs a TOA-based distance measuring process. When the distance between the distance measuring devices 100M and 200M becomes less than or equal to the first distance, the distance measuring device 200M sends a notification indicating that the distance is less than or equal to the first distance to the distance measuring device 100M1 or 100M2, and the speaker A or B outputs a sound. The speaker A or B outputs a sound when the distance measuring device 100M1 or 100M2 and the distance measuring device 200M is less than or equal to the first distance, and stops the output of the sound when the distance becomes greater than the first distance. The sound may be audio guidance, music, or the like.

As described, the distance measuring system 300M can be utilized in the speaker system. The frequency at which a distance measuring process is performed is set according to the distance measured by a distance measuring process performed by the distance measuring device 200M.

Accordingly, the measurement frequency can be set according to the measured distance, thereby making it possible to provide the distance measuring system 300M that can perform distance measurement with high accuracy. Further, because the measurement frequency is set according to the measured distance, the power consumption of the distance measuring devices 100M and 200M can be reduced according to the measured distance.

### <Second Embodiment>

A second embodiment differs from the first embodiment in that a distance measuring part 135 and an angle measuring part 136 of a distance measuring device 100 of a vehicle 10 perform a distance measuring process, an angle measuring process, and the like, and a distance measuring part 235 and an angle measuring part 236 of a distance measuring device 200 of a smartphone 20 do not perform a distance measuring process, an angle measuring process, and the like. Further, the distance measuring devices 100 and 200 according to the second embodiment include additional components, which are not included in the distance measuring devices 100 and 200 according to the first embodiment, in order to perform additional processes that are not performed in the first embodiment.

The distance measuring device 100 according to the second embodiment differs from the distance measuring device 100 according to the first embodiment in that the distance measuring device 100 according to the second embodiment performs a process of selecting one distance measuring device 200 with which to perform a distance measuring process and an angle measuring process together, from among a plurality of distance measuring devices 200. In addition, the distance measuring device 200 according to the second embodiment differs from the distance measuring device 200 according to the first embodiment in that the distance measuring device 200 according to the second embodiment transmits an advertising signal including distance measurement information on a distance measuring process and an angle measuring process performed by the distance measuring part 135 and the angle measuring part 136 of the distance measuring device 100.

In the second embodiment, unlike the first embodiment, the distance measuring device 100 is an example of a second communication station, and the distance measuring device 200 is an example of a first communication station. In the second embodiment, differences from the first embodiment will be mainly described below. Further, a duplicate description of components similar to the components of the distance measuring devices 100 and 200 according to the first embodiment will be omitted.

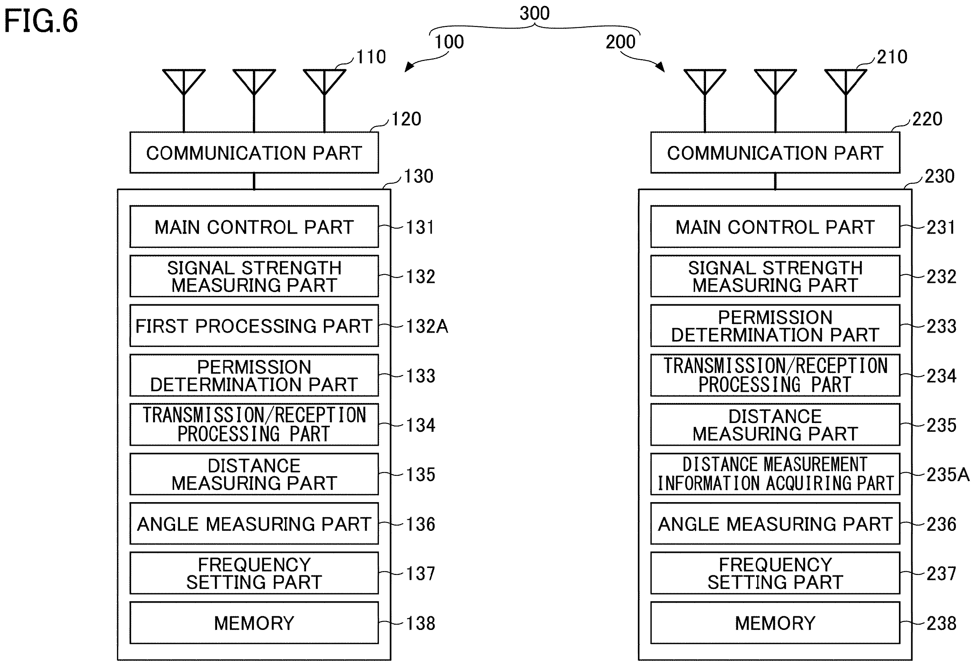

FIG. 6 is a diagram illustrating an example of configurations of the distance measuring devices 100 and 200 according to the second embodiment. A system including the distance measuring devices 100 and 200 is a distance measuring system 300. The distance measuring devices 100 and 200 according to the second embodiment will be described with reference to FIG. 6.

In FIG. 6, one distance measuring device 100 and one distance measuring device 200 are illustrated; however, in the second embodiment, there may be a plurality of distance measuring devices 100 and a plurality of distance measuring devices 200. Each of the plurality of distance measuring devices 100 according to the second embodiment selects one distance measuring device 200 with which to perform a distance measuring process and an angle measuring process together from among the plurality of distance measuring devices 200. For example, the plurality of distance measuring devices 100 are disposed at a distance of 100 m or more from each other, and each of the plurality of distance measuring devices 100 independently performs processing described below. Therefore, in the following, the processing performed by one distance measuring device 100 will be described.

The distance measuring device 100 performs a distance measuring process and an angle measuring process together with a selected distance measuring device 200. In the second embodiment, a distance measuring process performed by the distance measuring part 235 of the distance measuring device 200 according to the first embodiment is performed by the distance measuring part 135 of the distance measuring device 100 according to the second embodiment. A process performed by the transmission/reception processing part 234 of the distance measuring device 200 according to the first embodiment is performed by a transmission/reception processing part 134 of the distance measuring device 100 according to the second embodiment. Further, a process performed by the transmission/reception processing part 134 of the distance measuring device 100 according to the first embodiment is performed by a transmission/reception processing part 234 of the distance measuring device 200 according to the second embodiment. Further, a process performed by the angle measuring part 236 of the distance measuring device 200 according to the first embodiment is performed by the angle measuring part 136 of the distance measuring device 100 according to the second embodiment. Further, in the first embodiment, the main control part 231 of the distance measuring device 200 obtains the position of the distance measuring device 100 with respect to the distance measuring device 200 based on a distance and angles (an elevation angle and an azimuth angle). Similar to the first embodiment, a main control part 131 of the distance measuring device 100 according to the first embodiment obtains the position of the distance measuring device 200 with respect to the distance measuring device 100 based on a distance and angles (an elevation angle and an azimuth angle).

### <Configuration of Distance Measuring Device 200 According to Second Embodiment>

The distance measuring device 200 includes three antennas 210, a communication part 220, and a MCU 230. The configurations of the three antennas 210 and the communication part 220 are the same as the configurations of the three antennas 210 and the communication part 220 according to the first embodiment.

### <MCU 230>

The MCU 130 includes a main control part 231, a signal strength measuring part 232, a permission determination part 233, the transmission/reception processing part 234, the distance measuring part 235, a distance measurement information acquiring part 235A, the angle measuring part 236, a frequency setting part 237, and a memory 238. The MCU 230 according to the second embodiment has a configuration in which the distance measurement information acquiring part 235A is added to the configuration of the MCU 230 according to the first embodiment.

### <Distance Measurement Information Acquiring Part 235A>

The distance measurement information acquiring part 235A acquires distance measurement information on a distance measuring process performed by the distance measuring part 135 of the distance measuring device 100. The distance measurement information includes, for example, identification information of a distance measuring device 100 by which the immediately-previous distance measuring process is performed with the distance measuring device 200, a time (measurement time) at which the immediately-previous distance measuring process is performed, the position (immediately-previous position) of the distance measuring device 200 obtained based on a distance obtained by the immediately-previous distance measuring process and angles obtained by the immediately-previous angle measuring process, and a relative speed of the distance measuring device 200 with which the immediately-previous distance measuring process is performed (the relative speed between the distance measuring devices 100 and 200).

The immediately-previous position is identified based on a distance obtained by the distance measuring part 135 in the immediately-previous distance measuring process and an elevation angle and an azimuth angle obtained by the angle measuring part 136 in the immediately-previous angle measuring process. The elevation angle and the azimuth angle obtained by the angle measuring part 136 are an elevation angle and an azimuth angle in a polar coordinate system of the position of the distance measuring device 200 with respect to the distance measuring device 100.

Further, the relative speed is obtained by the transmission/reception processing part 134 when the transmission/reception processing part 134 transmits and receives signals to and from the transmission/reception processing part 234 of the distance measuring device 200 in order to acquire data such as a round-trip time, phase differences, and frequency components of signals necessary for the distance measuring part 135 to perform distance measurement.

Specifically, the transmission/reception processing part 134 transmits and receives signals of a plurality of frequencies f1 to fm (m is an integer of 2 or more) to and from the transmission/reception processing part 234 of the distance measuring device 200, and obtains, for the signals reciprocated by being transmitted from the distance measuring device 100 to the distance measuring device 200 and transmitted from the distance measuring device 200 to the distance measuring device 100, round-trip phases (first round-trip phases) of phases of the signals received by the distance measuring device 200 and phases of the signals received by the distance measuring device 100.

Further, after the transmission/reception processing part 134 obtains the first round-trip phase, the transmission/reception processing part 134 transmits and receives signals of a plurality of frequencies f1 to fm (m is an integer of 2 or more) to and from the transmission/reception processing part 234 of the distance measuring device 200, and obtains, for the signals reciprocated by being transmitted from the distance measuring device 100 to the distance measuring device 200 and transmitted from the distance measuring device 200 to the distance measuring device 100, round-trip phases (second round-trip phases) of phases of the signals received by the distance measuring device 200 and phases of the signals received by the distance measuring device 100.

Then, the transmission/reception processing part 134 obtains the relative speed with respect to the distance measuring device 100 based on differences between the first round-trip phases and the second round-trip phases at the frequencies f1 to fm.

In a case where the smartphone 20 including the distance measuring device 200 is being moved, a distance measuring device 100 by which the immediately-previous distance measuring process is performed with the distance measuring device 200 may be different from a distance measuring device 100 by which the next distance measuring process is to be performed by the distance measuring device 200. The next distance measuring process is a distance measuring process performed after the immediately-previous distance measuring process.

When the distance measuring device 200 performs a distance measuring process together with a distance measuring device 100, the distance measurement information acquiring part 235A stores identification information of the distance measuring device 100, the measurement time at which the distance measuring process is performed, the measured position, and the relative speed in the memory 238 as distance measurement information. The distance measurement information is acquired by the distance measuring device 100 when the distance measuring device 200 performs a distance measuring process and an angle measuring process together with the distance measuring device 100 at the next time. Therefore, when the distance measuring process and the angle measuring process are performed at the next time, the identification information of the distance measurement information is identification information (hereinafter referred to as immediately-previous identification information) of the distance measuring device 100 with which the immediately-previous distance measuring process and the immediately-previous angle measuring process are performed, the measurement time is an immediately-previous measurement time at which the immediately-previous angle measuring process is performed, the measured position is the immediately-previous position measured in the immediately-previous distance measuring process and the immediately-previous angle measuring process, and the relative speed is a relative speed (hereinafter referred to as an immediately-previous relative speed) obtained in the immediately-previous angle measuring process.

The distance measuring device 200 stores, in an advertising signal, the distance measurement information including the immediately-previous identification information, the immediately-previous measurement time, the immediately-previous position, and the immediately-previous relative speed, and transmits the advertising signal.

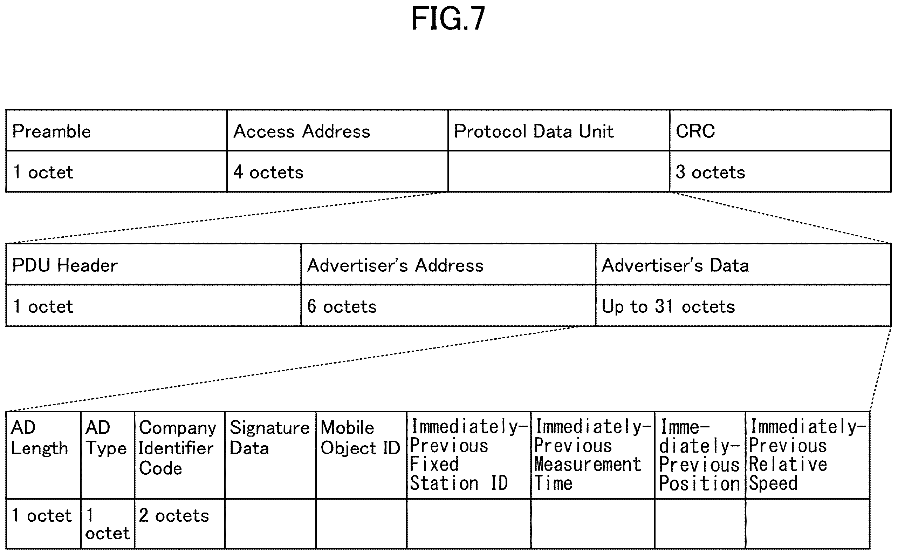

A location where distance measurement information is stored in an advertising signal will be described with reference to FIG. 7. FIG. 7 is a diagram illustrating an example of a location where distance measurement information is stored in an advertising signal. FIG. 7 illustrates an example of a data structure of the advertise signal.

The distance measurement information (the immediately-previous identification information, the immediately-previous measurement time, the immediately-previous position, and the immediately-previous relative speed) may be stored following a mobile object ID in Advertiser's Data in a Protocol Data Unit located between Access Address and CRC of the advertising signal. The mobile object ID is identification information of the distance measuring device 200 that transmits the advertising signal. The location of the distance measurement information is not limited thereto, and may be stored at any other location in the advertising signal.

### <Configuration of Distance Measuring Device 100 According to Second Embodiment>

The distance measuring device 100 includes three antennas 110, a communication part 120, and an MCU 130. The configurations of the three antennas 110 and the communication part 120 are the same as the configurations of the three antennas 110 and the communication part 120 according to the first embodiment.

### <MCU 130>

The MCU 130 includes a main control part 131, a signal strength measuring part 132, a first processing part 132A, a permission determination part 133, the transmission/reception processing part 134, the distance measuring part 135, the angle measuring part 136, a frequency setting part 137, and a memory 138. The MCU 130 according to the second embodiment has a configuration in which the first processing part 132A is added to the MCU 130 according to the first embodiment. The memory 138 is an example of a storage.

The main control part 131, the signal strength measuring part 132, the first processing part 132A, the permission determination part 133, the transmission/reception processing part 134, the distance measuring part 135, the angle measuring part 136, and the frequency setting part 137 represent functions of a program executed by the MCU 130 as functional blocks. Further, the memory 138 functionally represents a memory of the MCU 130.

### <First Processing Part 132A>

The first processing part 132A determines whether the RSSI (signal strength) of an advertising signal measured by the signal strength measuring part 132 for each of a plurality of distance measuring devices 200 is greater than or equal to a predetermined value (predetermined strength), and extracts a plurality of distance measuring devices 200 having RSSIs greater than or equal to the predetermined value (predetermined strength). Then, the first processing part 132A selects one distance measuring device 200 with which to perform a distance measuring process, from among the plurality of distance measuring devices 200 having RSSIs greater than or equal to the predetermined value (predetermined strength).

The plurality of distance measuring devices 200 whose RSSIs measured by the signal strength measuring part 132 are greater than or equal to the predetermined value are, for example, distance measuring devices 200 whose distances to the distance measuring device 100 are less than or equal to 100 m, for example. The RSSI of an advertising signal received by the distance measuring device 100 from a distance measuring device 200 is substantially proportional to the distance between the distance measuring devices 100 and 200. Therefore, by using an RSSI corresponding to a 100-m distance between the distance measuring devices 100 and 200 as the predetermined value (predetermined strength), distance measuring devices 200 that are located within about 100 m from the distance measuring device 100 can be extracted.

In a case where there are a plurality of distance measuring devices 200 having RSSIs greater than or equal to the predetermined value (predetermined strength), the first processing part 132A stores the plurality of RSSIs and a plurality of pieces of distance measurement information included in a plurality of received advertising signals in the memory 138. Each of the plurality of pieces of distance measurement information includes immediately-previous identification information, a measurement time, an immediately-previous position, and an immediately-previous relative speed. The immediately-previous identification information is identification information of a distance measuring device 100 by which the immediately-previous distance measuring process is performed with a distance measuring device 200 from which an advertising signal is transmitted. The measurement time is the immediately-previous measurement time indicating a time at which the immediately-previous distance measuring process is performed by the distance measuring device 200 from which the advertising signal is transmitted. The immediately-previous position is the immediately-previous position obtained by the distance measuring device 200 from which the advertising signal is transmitted, based on a distance and angles (an elevation angle and an azimuth angle) obtained in the immediately-previous distance measuring process and the immediately-previous angle measuring process. The immediately-previous relative speed is a relative speed obtained when the immediately-previous distance measuring process is performed by the distance measuring device 200 from which the advertising signal is transmitted.

The first processing part 132A selects, as a distance measuring device 200 with which to perform a distance measuring process, a distance measuring device 200 having distance measurement information indicating the immediately-previous identification information that is different from identification information of the distance measuring device 100 itself from among the plurality of distance measuring devices 200 having RSSI values greater than or equal to the predetermined value (predetermined strength).

Further, if there are a plurality of distance measuring devices 200 having distance measurement information indicating the immediately-previous identification information that is different from identification information of the distance measuring device 100 itself, the first processing part 132A selects, as a distance measuring device 200 with which to perform a distance measuring process, a distance measuring device 200 having the earliest reception time at which its advertising signal is received by the distance measuring device 100, from among the plurality of distance measuring devices 200.

The first processing part 132A performs evaluations based on the immediately-previous measurement times, the immediately-previous positions, and the immediately-previous relative speeds, and selects a distance measuring device 200 having the highest evaluation score as a distance measuring device 200 with which to perform a distance measuring process. Note that an evaluation score is not limited to a score calculated based on all of the immediately-previous measurement time, the immediately-previous position, and the immediately-previous relative speed, and may be calculated based on at least two or more pieces of information selected from the immediately-previous measurement time, the immediately-previous position, and the immediately-previous relative speed.

If there are a plurality of distance measuring devices 200 having the highest evaluation score based on "immediately-previous measurement time", "immediately-previous position", and "immediately-previous relative speed", the first processing part 132A predicts the positions of the plurality of distance measuring devices 200 when signals are received, based on the immediately-previous positions, the immediately-previous measurement times, and the immediately-previous relative speeds. Then, the first processing part 132A selects a distance measuring device 200 whose predicted position is the closest to the distance measuring device 100 as a distance measuring device 200 with which to perform a distance measuring process together.

### <Reception Information and Distance Measurement Information>

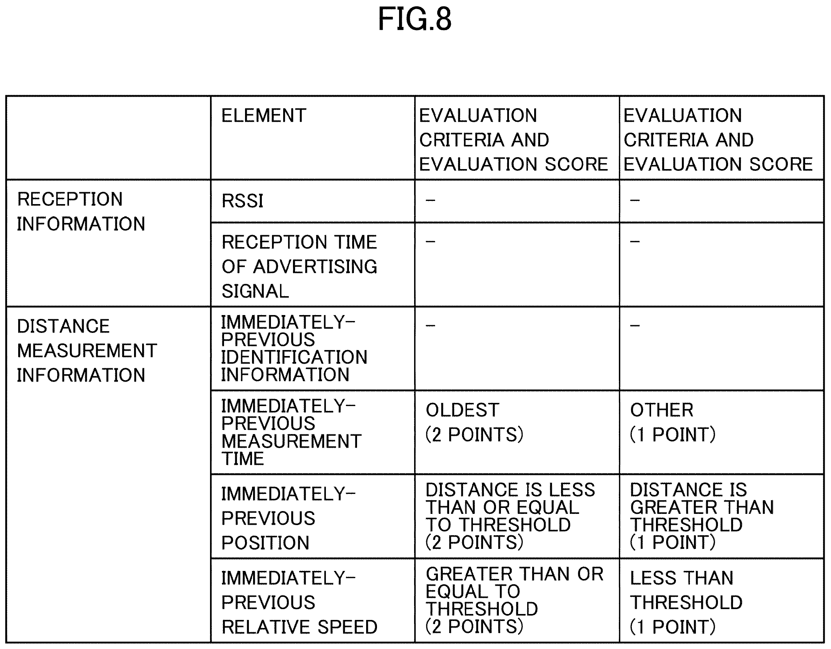

FIG. 8 is a diagram illustrating an example of reception information and distance measurement information received by the distance measuring device 100. With respect to the immediately-previous measurement time, the immediately-previous position, and the immediately-previous relative speed of the distance measurement information, evaluation criteria and evaluation scores are indicated. The evaluation scores are shown in parentheses.

The reception information includes the RSSI of an advertising signal received by the distance measuring device 100 from a distance measuring device 200 and a reception time at which the advertising signal is received. When receiving the advertising signal from the distance measuring device 200, the distance measuring device 100 acquires the RSSI and the reception time, and stores the acquired RSSI and reception time in the memory 138 as the reception information.

The distance measurement information includes the immediately-previous identification information, the immediately-previous measurement time, the immediately-previous position, and the immediately-previous relative speed. The distance measurement information is included in the advertising signal received by the distance measuring device 100 from the distance measuring device 200. Upon receiving the advertising signal, the distance measuring device 100 reads out the distance measurement information and stores the immediately-previous identification information, the immediately-previous measurement time, the immediately-previous position, and the immediately-previous relative speed in the memory 138.

When the first processing part 132A of the distance measuring device 100 evaluates the distance measuring device 200 based on the immediately-previous measurement time, the immediately-previous position, and the immediately-previous relative speed, evaluation points as illustrated in FIG. 8 are used as an example.

As an example, an evaluation criterion for the immediately-previous measurement time is whether the time is the earliest (oldest). The first processing part 132A gives two points to the distance measuring device 200 having the earliest immediately-previous measurement time, and gives one point to the other distance measuring devices 200.

As an example, an evaluation criterion for the immediately-previous position is whether the distance from the distance measuring device 100 to the distance measuring device 200 is less than or equal to a threshold. The first processing part 132A gives two points to the distance measuring device 200 if the distance from the distance measuring device 100 to the immediately-previous position of the distance measuring device 200 is less than or equal to the threshold, and gives one point to the distance measuring device 200 if the distance from the distance measuring device 100 to the immediately-previous position of the distance measuring device 200 is greater than the threshold.

As an example, an evaluation criterion for the immediately-previous relative speed is whether the immediately-previous relative speed is greater than or equal to a threshold. The first processing part 132A gives two points to the distance measuring device 200 if the immediately-previous relative speed of the distance measuring device 200 is greater than or equal to the threshold and gives one point to the distance measuring device 200 if the immediately-previous relative speed of the distance measuring device 200 is less than the threshold.

### <Calculation of Evaluation Scores>

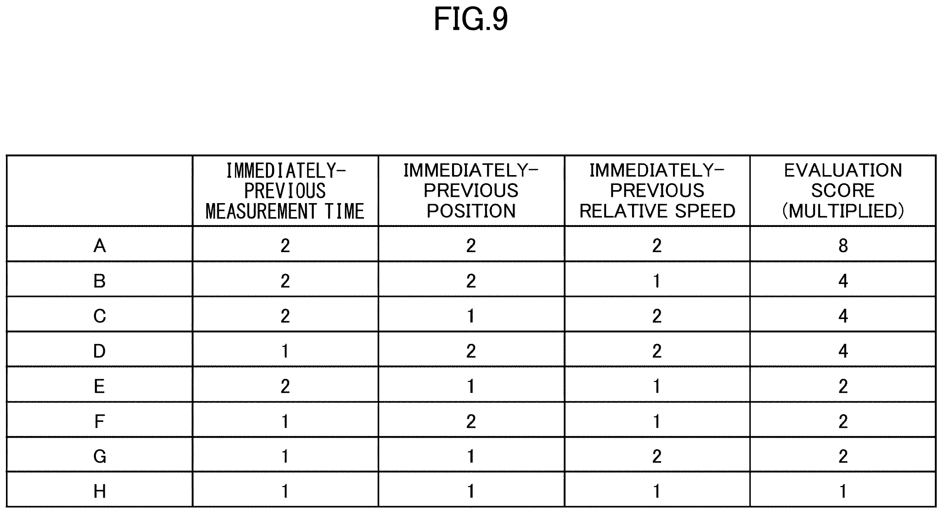

FIG. 9 is a diagram illustrating an example of calculation results of evaluation scores. As example in which results of evaluation scores of eight distance measuring devices 200A to 200H are calculated by the first processing part 132A will be described.

As an example, the first processing part 132A calculates an evaluation score by multiplying points assigned to the immediately-previous measurement time, the immediately-previous position, and the immediately-previous relative speed. In the case of the distance measuring device 200A, an evaluation score of 8 is obtained by multiplying two points of the immediately-previous measurement time, two points of the immediately-previous position, and two points of the immediately-previous relative speed. For the distance measuring devices 200B to 200H, evaluation scores can be calculated in the same manner.

### <Sequence>

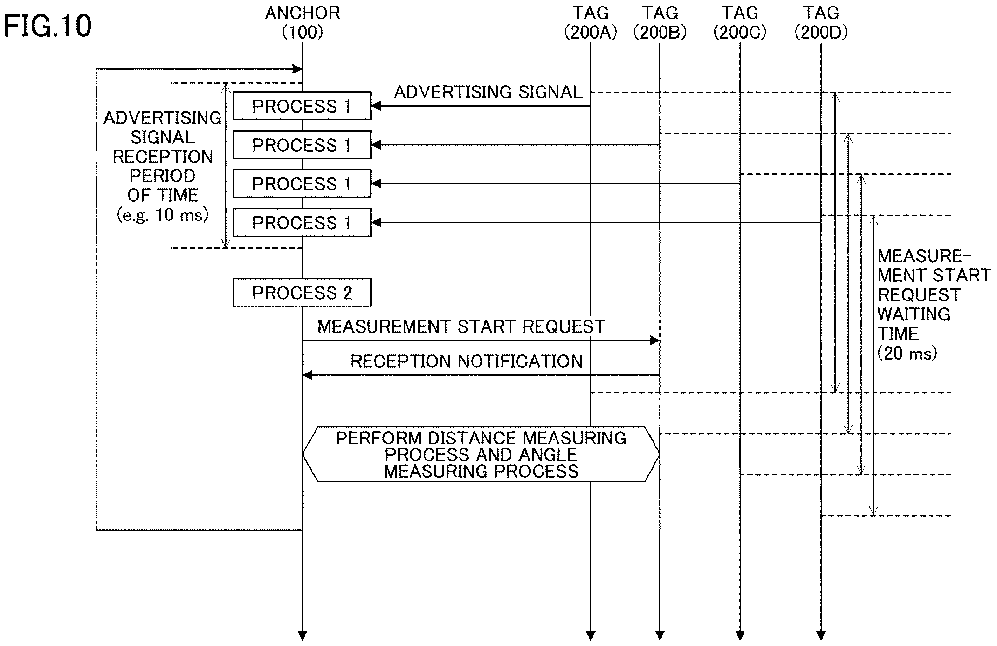

FIG. 10 is a sequence diagram illustrating an example of processing performed by distance measuring devices 100 and 200. The relationship between processing performed by the distance measuring device 100 and processing performed distance measuring devices 200A to 200D will also be described by illustrating processing performed by the distance measuring device 100 on the left half of FIG. 10 and processing performed by four distance measuring devices 200A to 200D on the right half of FIG. 10. Herein, in order to distinguish the four distance measuring devices 200 from each other, the four distance measuring devices 200 are referred to as the distance measuring devices 200A to 200D. The distance measuring device 100 is an anchor (fixed station), and the distance measuring devices 200A to 200D are tags (mobile stations).

First, the distance measuring devices 200A to 200D sequentially transmit advertising signals. Herein, an example in which advertisement signals are transmitted in the order of the distance measuring devices 200A to 200D will be described.

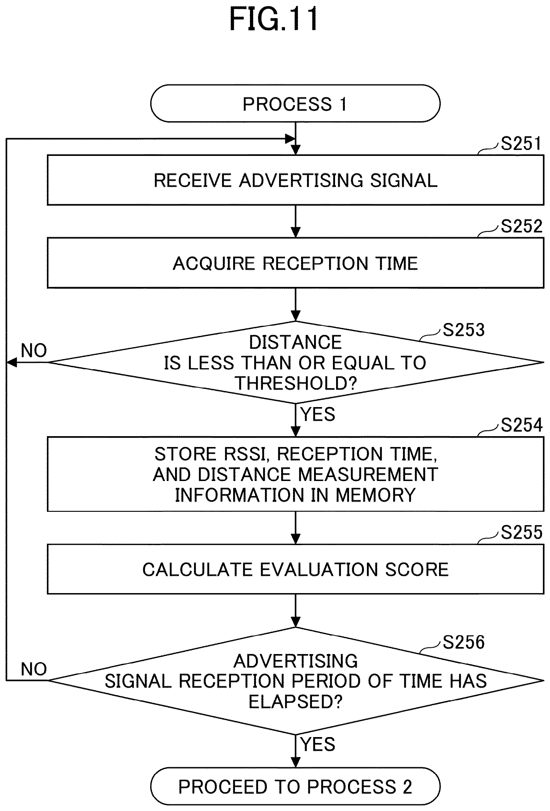

The distance measuring device 100 performs process 1 each time an advertising signal is received. The distance measuring device 100 sequentially receives advertising signals from a plurality of distance measuring devices 200 within 10 milliseconds (ms) set as an advertising signal reception period of time. Herein, as an example, the distance measuring device 100 receives advertising signals in the order of the distance measuring devices 200A to 200D within the advertising signal reception period of time, and performs the process 1 each time the distance measuring device 100 receives an advertising signal. The advertisement signal reception period of time is 10 ms as an example. The details of the process 1 will be described later with reference to FIG. 11.

When the advertising signal reception period of time ends, the distance measuring device 100 performs process 2. In the process 2, a distance measuring device 200 with which a distance measuring process and an angle measuring process are performed by the distance measuring device 100 is selected. In this example, it is assumed that the distance measuring device 200B is selected.

After transmitting the advertising signals, the distance measuring devices 200A to 200D wait for 20 ms before a measurement start request is transmitted, for example. 20 ms is a measurement start request waiting time. Note that if the measurement start request is not received within the measurement start request waiting time, the distance measuring devices 200 periodically transmit the advertising signals.

The distance measuring device 100 transmits the measurement start request to the selected distance measuring device 200B. The distance measuring device 200B that has received the measurement start request transmits a reception notification. As a result, the distance measuring device 100 performs the distance measuring process and the angle measuring process together with the distance measuring device 200B. Thereafter, the distance measuring device 100 and the distance measuring device 200B perform the processing described in the first embodiment with reference to FIG. 3A, FIG. 3B, FIG. 4A, and FIG. 4B.

### <Process 1>

FIG. 11 is a flowchart illustrating a specific example of processing contents of the process 1. The process 1 is performed by the distance measuring device 100.

The distance measuring device 100 receives an advertising signal (step S251).

The first processing part 132A acquires a reception time at which the advertising signal is received (step S252).

The first processing part 132A determines whether the distance from the distance measuring device 100 to a distance measuring device 200 is less than or equal to a threshold, based on the RSSI (signal strength) of the advertising signal measured by the signal strength measuring part 132 (step S253). The RSSI is substantially proportional to the distance. Thus, the first processing part 132A determines whether the distance from the distance measuring device 100 to the distance measuring device 200 is less than or equal to the threshold by determining whether the RSSI is greater than or equal to a predetermined strength. Note that the threshold used in step S253 is, for example, 100 m. The threshold used in step S253 is set within a range such that an advertising signal whose RSSI level allows the distance measuring device 100 to receive the advertising signal and read out distance measurement information can be obtained.

If the first processing part 132A determines that the distance from the distance measuring device 100 to the distance measuring device 200 is less than or equal to the threshold (YES in S253), the first processing part 132A stores the RSSI, the reception time, and distance measurement information in the memory 138 (step S254). The distance measurement information is read out from the received advertising signal.

The first processing part 132A calculates an evaluation score based on the immediately-previous measurement time, the immediately-previous position, and the immediately-previous relative speed included in the distance measurement information stored in the memory 138 in step S254 (step S255). The evaluation criterion for the immediately-previous measurement time is whether the time is the earliest (oldest) as described above. The evaluation criterion for the immediately-previous position is whether the distance from the distance measuring device 100 to the distance measuring device 200 is less than or equal to the threshold. The threshold of the distance is, for example, 50 m. Further, a threshold serving as the evaluation criterion for the immediately-previous relative speed is, for example, 18 km/h.

The first processing part 132A determines whether the advertising signal reception period of time has elapsed (step S256).

If the first processing part 132A determines that the advertising signal reception period of time has not elapsed (NO in S256), the flow returns to step S251. In such a case, an advertising signal is received from another distance measuring device 200 and an evaluation score of the other distance measuring device 200 is calculated.

Further, if the first processing part 132A determines that the distance from the distance measuring device 100 to the distance measuring device 200 is not less than or equal to the threshold in step S253 (NO in S253), the flow returns to step S251. This is because the distance measuring device 200 is located so far away from the distance measuring device 100 that an advertising signal whose RSSI level allows the distance measuring device 100 to receive the advertising signal and read out distance measurement information cannot be obtained.

If the first processing part 132A determines that the advertising signal reception period of time has elapsed in step S256 (YES in S256), the first processing part 132A ends the process 1, and causes the flow to proceed to the process 2.

By performing the process 1 as described above, the distance measuring device 100 extracts a distance measuring device 200 having RSSI greater than or equal to the predetermined value (predetermined strength). If a plurality of distance measuring devices 200 are extracted, the process 2 is performed so as to narrow down the plurality of distance measuring devices 200 to one distance measuring device 200 with which the distance measuring process and the angle measuring process are performed.

### <Process 2>

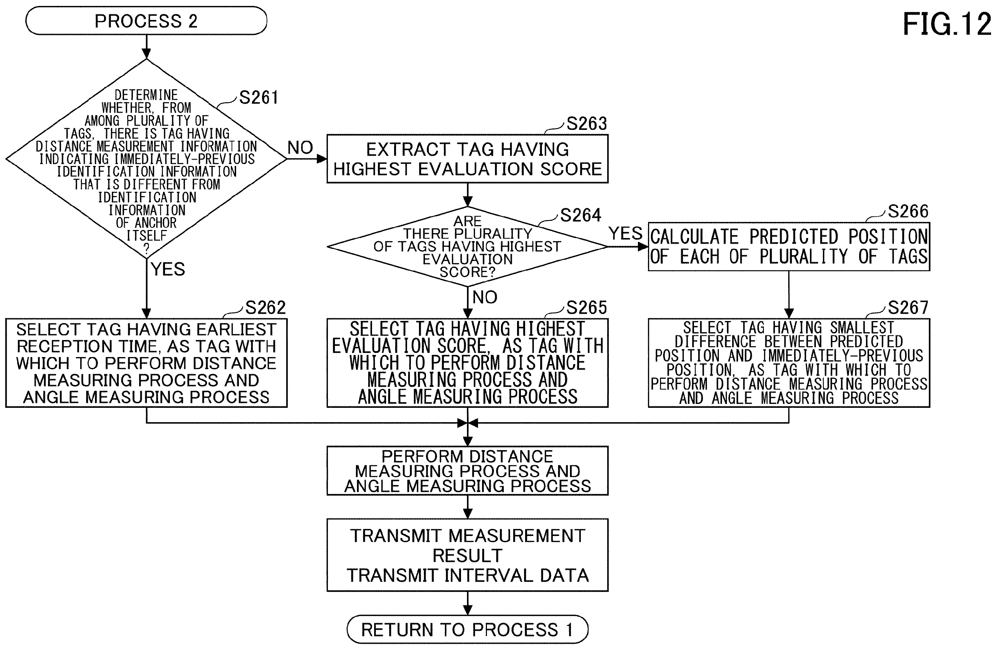

FIG. 12 is a flowchart illustrating a specific example of processing contents of the process 2. The process 2 is performed by the distance measuring device 100.

The first processing part 132A determines whether there is a distance measuring device 200 having distance measurement information indicating the immediately-previous identification information that is different from identification information of the distance measuring device 100 itself, from among the plurality of distance measuring devices 200 (tags) extracted in the process 1 (step S261).

If the first processing part 132A determines that there are a plurality of distance measuring devices 200 having distance measurement information indicating the immediately-previous identification information that is different from the identification information of the distance measuring device 100 itself (YES in S261), the first processing part 132A selects, as a distance measuring device 200 with which to perform the distance measuring process and the angle measuring process, a distance measuring device 200 having the earliest reception time of an advertising signal from among the plurality of distance measuring devices 200 (step S262).

The distance measuring device 200 having distance measurement information indicating the immediately-previous identification information that is different from identification information of the distance measuring device 100 itself is a distance measuring device 200 that performed the immediately-previous distance measuring process and angle measuring process with another distance measuring device 100 different from the distance measuring device 100 itself, and is a distance measuring device 200 that has entered within the threshold distance (100 m in step S253) of the distance measuring device 100 itself. It is assumed that the distance measuring process and the angle measuring process are preferentially performed by such a distance measuring device 200.

Note that if there is one distance measuring device 200 having distance measurement information indicating the immediately-previous identification information that is different from the identification information of the distance measuring device 100 itself, the distance measuring device 200 is selected in step S262 as the distance measuring device 200 with which the distance measuring process and the angle measuring process are performed.

If the first processing part 132A determines that there is no distance measuring device 200 having distance measurement information indicating the immediately-previous identification information that is different from the identification information of the distance measuring device 100 itself in step S261 (NO in S261), the first processing part 132A extracts a distance measuring device 200 having the highest evaluation score (step S263). If there is no distance measuring device 200 having distance measurement information indicating the immediately-previous identification information that is different from the identification information of the distance measuring device 100 itself, all of the plurality of distance measuring devices 200 extracted in the process 1 performed the immediately-previous distance measuring process and angle measuring process together with the distance measuring device 100 itself. Thus, based on the evaluation score, the first processing part 132A determines which distance measuring device 200 is to be preferentially selected to perform the distance measuring process and the angle measuring process. The evaluation score of the distance measuring device 200 may be read out from the memory 138.

The first processing part 132A determines whether there are a plurality of distance measuring devices 200 having the highest evaluation score (step S264).

If the first processing part 132A determined that there are not a plurality of distance measuring devices 200 having the highest evaluation score (NO in S264), the first processing part 132A selects one distance measuring device 200 having the highest evaluation score as a distance measuring device 200 with which to perform the distance measuring process and the angle measuring process (step S265).

If the first processing part 132A determined that there are a plurality of distance measuring devices 200 having the highest evaluation score (YES in S264), the first processing part 132A calculates the predicted position of each of the plurality of distance measuring devices (step S266).

The predicted position is obtained by predicting the position of a distance measuring device 200 at a reception time of an advertising signal. The first processing part 132A calculates a predicted value of the position of the distance measuring device 200 at the reception time of the advertising signal by multiplying, by the immediately-previous relative speed, the time from the immediately-previous measurement time to the reception time of the advertising signal included in distance measurement information.

The first processing part 132A selects a distance measuring device 200 having the smallest difference between the predicted position and the immediately-previous position as a distance measuring device 200 with which to perform the distance measuring process and the angle measuring process (step S267).

Upon completion of step S262, S265, or S267, the first processing part 132A transmits the measurement start request (see FIG. 10) to the selected distance measuring device 200. As a result, the distance measuring device 100 performs the distance measuring process and the angle measuring process with the selected distance measuring device 200.

The distance measuring device 100 transmits a measurement result (a position obtained by a distance and angles) to the distance measuring device 200, and transmits interval data to the distance measuring device 200. Upon completion of the above-described process 2, the distance measuring device 100 causes the flow to return to the process 1.

### <Example Calculation of Predicted Positions>

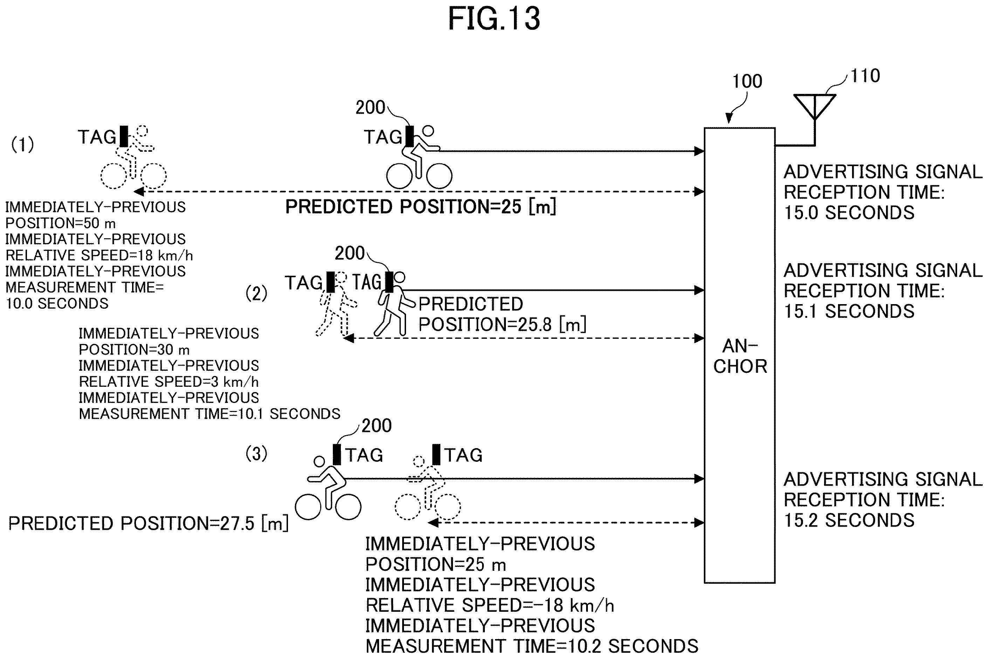

FIG. 13 is a diagram illustrating example calculation of predicted positions. FIG. 13 illustrates a distance measuring device 100 (anchor) and three distance measuring devices 200 (tags). Cases (1) to (3) will be described in this order. Note that the immediately-previous position is indicated by the distance from the distance measuring device 100 to each of the distance measuring devices 200. For the sake of simplicity, the elevation angle is defined as 0 degrees and the azimuth angle is defined as an angle indicating the leftward direction with the distance measuring device 100 in FIG. 13 as a reference. Further, the immediately-previous measurement time and the reception time of each advertising signal are indicated by an elapsed time (seconds) with respect to a reference time.

In the case (1), a user having a distance measuring device 200 is approaching the distance measuring device 100 by bicycle. The immediately-previous position is 50 mm, the immediately-previous relative speed is 18 km/h, the immediately-previous measurement time is 10.0 seconds, and the reception time of an advertising signal is 15.0 seconds. In this case, the predicted position is 25 m.

In the case (2), a user having a distance measuring device 200 approaches the distance measuring device 100 on foot. The immediately-previous position is 30 mm, the immediately-previous relative speed is 3 km/h, the immediately-previous measurement time is 10.1 seconds, and the reception time of an advertising signal is 15.1 seconds. In this case, the predicted position is 25.8 m.

In case (3), the user having a distance measuring device 200 is moving away from the distance measuring device 100 by bicycle. The immediately-previous position is 25 mm, the immediately-previous relative speed is -18 km/h (the relative speed in a direction away from the distance measuring device 100), the immediately-previous measurement time is 10.0 seconds, and the reception time of an advertising signal is 10.2 seconds. In this case, the predicted position is 27.5 m.

If the predicted positions of the cases (1) to (3) are calculated in step S266 described above, the first processing part 132A selects, as a distance measuring device 200 with which to perform the distance measuring process and the angle measuring process, the distance measuring device 200 of the case (1) having the smallest different between the predicted position and the immediately-previous position in step S267. The closest distance measuring device 200 can be preferentially selected and the distance measuring distance measuring process and the angle measuring process can be performed.

### <Effects>

The distance measuring system 300 according to the second embodiment includes the distance measuring device 100 and the distance measuring device 200. The distance measuring device 200 includes the distance measuring part 235 configured to perform a distance measuring process of measuring a distance between the distance measuring devices 100 and 200 based on a result obtained from an advertising signal transmitted bidirectionally between the distance measuring devices 100 and 200, and the frequency setting part 237 configured to set a frequency at which the distance measuring process is performed by the distance measuring part 235 according to the distance measured by the distance measuring part 235. Further, the distance measuring device 100 (second communication station) may include the signal strength measuring part 132 configured to perform a signal strength measuring process of measuring an RSSI of an advertising signal received from each of a plurality of distance measuring devices 200 (first communication stations); and the first processing part 132A configured to determine whether each of the RSSIs measured by the signal strength measuring part 132 for each of the plurality of distance measuring devices 200 is greater than or equal to a predetermined strength, and select a distance measuring device 200 with which to perform a distance measuring process, from among a plurality of distance measuring devices 200 having RSSIs determined to be greater than or equal to the predetermined strength. Therefore, the frequency at which the distance measuring part 235 performs the distance measuring process can be set according to the distance measured by the distance measuring part 235. In addition, in a case where there are the plurality of distance measuring devices 200 having RSSIs greater than or equal to the predetermined strength, one distance measuring device 200 with which the distance measuring process is to be performed can be selected.

Further, the plurality of distance measuring devices 200 transmit advertising signals each including distance measurement information on the distance measuring process, and the distance measuring device 100 receives the advertising signals from the plurality of distance measuring devices 200. The distance measuring device 100 further includes the memory 138 (storage), and the first processing part 132A may store: a plurality of pieces of distance measurement information included in advertising signals received from the plurality of distance measuring devices 200 having the RSSIs determined to be greater than or equal to the predetermined strength; and the plurality of RSSIs in the memory 138. As a determination material for selecting one distance measuring device 200, the RSSIs and the pieces of distance measurement information of the plurality of distance measuring devices 200 having the RSSIs determined to be greater than or equal to the predetermined strength can be stored in the memory 138. Thus, one distance measuring device 200 can be easily selected.

Further, there are a plurality of distance measuring devices 100, and each of the pieces of distance measurement information includes immediately-previous identification information for identifying, from among the plurality of distance measuring devices 100, a distance measuring device 100 by which the immediately-previous distance measuring process is performed with one of the plurality of distance measuring devices 200. The first processing part 132A may select a distance measuring device 200 having distance measurement information indicating the immediately-previous identification information that is different from identification information of the distance measuring device 100 itself, as a distance measuring device 200 with which to perform the distance measuring process, from among the plurality of distance measuring devices 200 having the RSSI determined to be greater than or equal to the predetermined strength. The distance measuring device 200 with which the immediately-previous distance measuring process is performed by another distance measuring device 100 different from the distance measuring device 100 itself is a distance measuring device 200 that has moved to the vicinity of the distance measuring device 100 itself. Such a distance measuring device 200 can be preferentially selected.

If there are a plurality of distance measuring devices 200 having distance measurement information indicating immediately-previous identification information that is different from the identification information of the distance measuring device 100 itself, the first processing part 132A may select, as a distance measuring device 200 with which to perform the distance measuring process, a distance measuring device 200 having the earliest reception time at which an advertising signal is received by the distance measuring device 100 from among the plurality of distance measuring devices 200. If there are a plurality of distance measuring devices 200 that have moved to the vicinity of the distance measuring device 100 itself, a distance measuring device 200 having the earliest reception time at which an advertising signal is received by the distance measuring device 100 is selected. In this manner, the distance measuring device 200 having the longest elapsed time from the immediately-previous distance measuring process can be preferentially selected from among the plurality of distance measuring devices 200 that have moved to the vicinity of the distance measuring device 100 itself.

Further, the distance measuring device 100 includes the plurality of antennas 110; and the angle measuring part 136 configured to perform, when signals of a plurality of frequencies are transmitted bidirectionally between the distance measuring device 100 and the distance measuring device 200, an angle measuring process of measuring an angle indicating a position of the distance measuring device 200 with respect to the distance measuring device 100, based on phase differences obtained when the signals are received by the plurality of antennas of the distance measuring device 100 from the distance measuring device 200. The distance measurement information includes the immediately-previous measurement time at which the immediately-previous distance measuring process is performed, the immediately-previous position obtained based on a distance measured in the immediately-previous distance measuring process and an angle measured in the immediately-previous distance measuring process, and the immediately-previous relative speed obtained in the immediately-previous distance measuring process. The first processing part 132A may select, as a distance measuring device 200 with which to perform the distance measuring process, a distance measuring device 200 having the highest evaluation score based on at least two pieces of information selected from the immediately-previous measurement time, the immediately-previous position, and the immediately-previous relative speed. The evaluation score is used as a determination index, and thus a distance measuring device 200 with which the distance measuring process is to be preferentially performed can be easily selected.

Further, the distance measurement information includes the immediately-previous measurement time, the immediately-previous position, and the immediately-previous relative speed. If there are a plurality of distance measuring devices 200 having the highest evaluation score based on the immediately-previous measurement times, the immediately-previous positions, and the immediately-previous relative speeds, the first processing part 132A predicts positions of the plurality of distance measuring devices 200 when the advertising signals are received, based on the immediately-previous positions, the immediately-previous measurement times, and the immediately-previous relative speeds, and selects, as a distance measuring device 200 with which to perform the distance measuring process, a distance measuring device 200 whose predicted position is the closest to the distance measuring device 100. The closest distance measuring device 200 can be preferentially selected and the distance measuring process can be performed together.

The distance measuring system 300 according to the second embodiment includes the distance measuring device 100 and the distance measuring device 200. The distance measuring device 100 (second communication station) includes the signal strength measuring part 132 configured to perform a signal strength measuring process of measuring an RSSI of an advertising signal received from each of a plurality of distance measuring devices 200 (first communication stations); and the first processing part 132A configured to determine whether the RSSI measured by the signal strength measuring part 132 for each of the plurality of distance measuring devices 200 is greater than or equal to a predetermined strength, and select a distance measuring device 200 with which to perform the distance measuring process, from among a plurality of distance measuring devices 200 having RSSIs determined to be greater than or equal to the predetermined strength. Accordingly, if there are a plurality of distance measuring devices 200 having RSSIs determined to be greater than or equal to the predetermined strength, one distance measuring device 200 with which to perform the distance measuring process can be selected.

The distance measuring systems, the communication stations, and the distance measuring methods according to the exemplary embodiments of the present disclosure have been described above, but the present disclosure is not limited to the embodiments specifically disclosed, and various modifications and changes can be made without departing from the scope of the claims.

This application is based on and claims priority to Japanese Patent Application No. 2022-164644, filed on October 13, 2022, the entire contents of which are incorporated herein by reference.

### DESCRIPTION OF THE REFERENCE NUMERALS

10 vehicle
20, 20M smartphone
100, 100M, 100M1, 100M2 distance measuring device (example of first communication station in first, example of second communication station in second embodiment)
110 antenna
120 communication part
131 main control part
132 signal strength measuring part
132A first processing part
133 permission determination part
134 transmission/reception processing part
135 distance measuring part
136 angle measuring part
137 frequency setting part
138 memory
200, 200M distance measuring device (example of second communication station in first embodiment, example of first communication station in first embodiment)
210 antenna
220 communication part
231 main control part
232 signal strength measuring part
233 permission determination part
234 transmission/reception processing part
235 distance measuring part
235A distance measurement information acquiring part
236 angle measuring part
237 frequency setting part
238 memory
300, 300M distance measuring system

## Claims

1. A distance measuring system comprising:
a first communication station; and
a second communication station, wherein
the second communication station includes
a distance measuring part configured to perform a distance measuring process of measuring a distance between the first communication station and the second communication station based on a result obtained from a signal transmitted bidirectionally between the first communication station and the second communication station; and
a frequency setting part configured to set a frequency at which the distance measuring process is performed by the distance measuring part according to the distance measured by the distance measuring part.

2. The distance measuring system according to claim 1, wherein the second communication station is movable with respect to the first communication station.

3. The distance measuring system according to claim 1 or 2, wherein the frequency setting part increases the frequency as the distance measured by the distance measuring part decreases.

4. The distance measuring system according to any one of claims 1 to 3, wherein
the first communication station includes
a signal strength measuring part configured to perform a signal strength measuring process of measuring a signal strength of a signal received from the second communication station, and
a permission determination part configured to permit the distance measuring part of the second communication station to perform the distance measuring process in a case where the signal strength measured by the signal strength measuring part is greater than or equal to a predetermined strength.

5. The distance measuring system according to any one of claims 1 to 4, wherein, upon the distance between the first communication station and the second communication station being less than or equal to a first predetermined distance, the distance measuring part measures a distance between the first communication station and the second communication station based on a relationship between round-trip phase differences and a plurality of frequencies, the relationship being obtained by transmitting signals of the plurality of frequencies bidirectionally between the first communication station and the second communication station.

6. The distance measuring system according to claim 5, wherein, in a case where the distance between the first communication station and the second communication station is not less than or equal to the first predetermined distance, the distance measuring part measures a distance between the first communication station and the second communication station based on a round-trip time of a signal sent back and forth between the first communication station and the second communication station.

7. The distance measuring system according to claim 6, wherein, upon the distance between the first communication station and the second communication station being less than or equal to the first predetermined distance, the frequency setting part sets the frequency, at which the distance measuring process is performed by the distance measuring part, higher than when the distance between the first communication station and the second communication station is not less than or equal to the first predetermined distance.

8. The distance measuring system according to claim 5, wherein, upon the distance between the first communication station and the second communication station being less than or equal to a second predetermined distance that is shorter than the first predetermined distance, the frequency setting part sets the frequency, at which the distance measuring process is performed by the distance measuring part, higher than when the distance between the first communication station and the second communication station is not less than or equal to the second predetermined distance.

9. The distance measuring system according to claim 5, wherein
the second communication station further includes
a plurality of antennas, and
an angle measuring part configured to perform, when the signals of the plurality of frequencies are transmitted bidirectionally between the first communication station and the second communication station, an angle measuring process of measuring an angle indicating a position of the first communication station with respect to the second communication station based on phase differences obtained when the signals are received by the plurality of antennas of the second communication station from the first communication station.

10. The distance measuring system according to claim 1, wherein
the second communication station includes
a signal strength measuring part configured to perform a signal strength measuring process of measuring a signal strength of a signal received from each of a plurality of first communication stations, and
a first processing part configured to determine whether the signal strength measured by the signal strength measuring part for each of the plurality of first communication stations is greater than or equal to a predetermined strength, and select a first communication station with which to perform the distance measuring process, from among a plurality of the first communication stations having signal strengths determined to be greater than or equal to the predetermined strength.

11. The distance measuring system according to claim 10, wherein
the plurality of first communication stations transmit signals each including distance measurement information on the distance measuring process,
the second communication station receives the signals transmitted from the plurality of first communication stations,
the second communication station further includes a storage, and
the first processing part stores, in the storage, the signal strengths, and pieces of distance measurement information included in signals received from the plurality of first communication stations having the signal strengths determined to be greater than or equal to the predetermined strength.

12. The distance measuring system according to claim 11, wherein
the second communication station includes a plurality of second communication stations,
each of the pieces of distance measurement information includes immediately-previous identification information for identifying, from among the plurality of second communication stations, a second communication station by which an immediately-previous distance measuring process is performed with one of the plurality of first communication stations, and
the first processing part selects, as the first communication station with which to perform the distance measuring process, a first communication station having distance measurement information indicating immediately-previous identification information that is different from identification information of the second communication station itself, from among the plurality of first communication stations having the signal strengths determined to be greater than or equal to the predetermined strength.

13. The distance measuring system according to claim 12, wherein
each of the pieces of distance measurement information includes a reception time at which a signal is received by the second communication station from the one of the plurality of first communication stations, and
in a case where two or more first communication stations have distance measurement information indicating immediately-previous identification information that is different from the identification information of the second communication station itself, the first processing part selects, as the first communication station with which to perform the distance measuring process, a first communication station having an earliest reception time from among the two or more first communication stations.

14. The distance measuring system according to claim 12 or 13, wherein
the second communication station further includes
a plurality of antennas, and
an angle measuring part configured to perform, when signals of a plurality of frequencies are transmitted bidirectionally between the first communication station and the second communication station, an angle measuring process of measuring an angle indicating a position of the first communication station with respect to the second communication station, based on phase differences obtained when the signals are received by the plurality of antennas of the second communication station from the first communication station,
each of the pieces of distance measurement information includes
an immediately-previous measurement time at which the immediately-previous distance measuring process is performed,
an immediately-previous position obtained based on a distance measured in the immediately-previous distance measuring process and an angle measured in an immediately-previous angle measuring process, and
an immediately-previous relative speed obtained in the immediately-previous distance measuring process, and
the first processing part selects, as the first communication station with which to perform the distance measuring process, a first communication station having a highest evaluation score obtained based on at least two or more pieces of information selected from the immediately-previous measurement time, the immediately-previous position, and the immediately-previous relative speed.

15. The distance measuring system according to claim 14, wherein
each of the pieces of distance measurement information includes the immediately-previous measurement time, the immediately-previous position, and the immediately-previous relative speed, and
in a case where there are two or more first communication stations having the highest evaluation score based on immediately-previous measurement times, immediately-previous positions, and immediately-previous relative speeds, the first processing part predicts positions of the two or more first communication stations when the signals are received, based on the immediately-previous positions, the immediately-previous measurement times, and the immediately-previous relative speeds, and selects, as the first communication station with which to perform the distance measuring process, a first communication station whose predicted position is closest to the second communication station.

16. A distance measuring system comprising:
a first communication station; and
a second communication station, wherein
the second communication station includes
a signal strength measuring part configured to measure a signal strength of a signal received from each of a plurality of first communication stations, and
a first processing part configured to determine whether the signal strength measured by the signal strength measuring part for each of the plurality of first communication stations is greater than or equal to a predetermined strength, and select a first communication station with which to perform the distance measuring process, from among a plurality of the first communication stations having signal strengths determined to be greater than or equal to the predetermined strength.

17. A distance measuring system comprising:
a first communication station; and
a second communication station, wherein
the first communication station or the second communication station includes
a distance measuring part configured to perform a distance measuring process of measuring a distance between the first communication station and the second communication station based on a result obtained from a signal transmitted bidirectionally between the first communication station and the second communication station, and
a frequency setting part configured to set a frequency at which the distance measuring process is performed by the distance measuring part according to the distance measured by the distance measuring part.

18. A communication station serving as a second communication station communicable with a first communication station, the communication station comprising:
a distance measuring part configured to perform a distance measuring process of measuring a distance between the first communication station and the second communication station based on a result obtained from a signal transmitted bidirectionally between the first communication station and the second communication station, and
a frequency setting part configured to set a frequency at which the distance measuring process is performed by the distance measuring part according to the distance measured by the distance measuring part.

19. A distance measuring method performed by a distance measuring system including a first communication station and a second communication station, the distance measuring method comprising:
performing a distance measuring process of measuring a distance between the first communication station and the second communication station based on a result obtained from a signal transmitted bidirectionally between the first communication station and the second communication station; and
setting a frequency at which the distance measuring process is performed according to the distance measured in the distance measuring process.
